# EUROPEAN PATENT APPLICATION

(11) **EP 4 462 703 A1**
(43) Date of publication of application: **13.11.2024**
(21) Application number: 23737012.7
(22) Date of filing: 04.01.2023
(51) Int. Cl.: H04L 1/00, H04W 24/10

(54) **METHOD FOR REPORTING INTERFERENCE ASSISTANCE INFORMATION, TERMINAL, AND NETWORK SIDE DEVICE**

(30) Priority: 05.01.2022 CN 202210006981
(71) Applicant: VIVO MOBILE COMMUNICATION CO., LTD., Dongguan, Guangdong 523863 (CN)
(72) Inventor: ZHANG, Yanxia, Dongguan, Guangdong 523863 (CN); YANG, Xiaodong, Dongguan, Guangdong 523863 (CN)
(74) Representative: Murgitroyd & Company
(86) International application number: PCT/CN2023/070299
(87) International publication number: WO 2023/131148

(57) **Abstract**

This application discloses an interference assistance information reporting method, a terminal, and a network-side device, pertaining to the field of communication technologies. The interference assistance information reporting method in embodiments of this application includes: reporting, by a terminal, interference assistance information to a network-side device in a case that an in-device coexistence IDC problem occurs, where the interference assistance information includes at least one of the following: per-bandwidth part BWP interference assistance information; and per-physical resource block PRB interference assistance information.

## Description

### CROSS-REFERENCE TO RELATED APPLICATIONS

This application claims priority to Chinese Patent Application No. 202210006981.5, filed on January 5, 2022, and entitled "INTERFERENCE ASSISTANCE INFORMATION REPORTING METHOD, TERMINAL, AND NETWORK-SIDE DEVICE", which is incorporated herein by reference in its entirety.

### TECHNICAL FIELD

This application pertains to the field of communication technologies and specifically relates to an interference assistance information reporting method, a terminal, and a network-side device.

### BACKGROUND

Due to requirements of different networks and services, one terminal may be equipped with a variety of different wireless transceivers, such as LTE, 5G, wireless fidelity (Wireless Fidelity, Wi-Fi), Bluetooth (Bluetooth), and global navigation satellite system (Global Navigation Satellite System, GNSS). In adjacent frequencies or harmonic frequency part, a receiver of a terminal may be interfered by radio from a transmitter, so the terminal may have an in-device coexistence (In-Device Coexistence, IDC) problem.

At present, when the terminal has an IDC problem, the terminal may report a 3GPP frequency affected by IDC to the network side, and the network side can resolve the IDC problem by deleting a corresponding frequency based on the frequency information reported by the terminal. However, if the network side deletes the whole frequency, frequency domain resources available to the terminal are reduced, thereby reducing a resource utilization rate.

### SUMMARY

Embodiments of this application provide an interference assistance information reporting method, a terminal, and a network-side device, which can resolve the problem of low resource utilization rate caused by deleting the whole frequency when an IDC problem occurs in a terminal.

According to a first aspect, an interference assistance information reporting method is provided, applied to a terminal, and the method includes:
reporting, by a terminal, interference assistance information to a network-side device in a case that an IDC problem occurs, where the interference assistance information includes at least one of the following: per-bandwidth part BWP interference assistance information; and per-physical resource block PRB interference assistance information.

According to a second aspect, an interference assistance information reporting method is provided, applied to a network-side device, and the method includes:
receiving interference assistance information reported by a terminal in a case that an IDC problem occurs, where the interference assistance information includes at least one of the following: per-bandwidth part BWP interference assistance information; and per-physical resource block PRB interference assistance information.

According to a third aspect, an interference assistance information reporting apparatus is provided, including:
a sending module, configured to report interference assistance information to a network-side device in a case that an in-device coexistence IDC problem occurs, where the interference assistance information includes at least one of the following: per-bandwidth part BWP interference assistance information; and per-physical resource block PRB interference assistance information.

According to a fourth aspect, an interference assistance information reporting apparatus is provided, including:
a receiving module, configured to receive interference assistance information reported by a terminal in a case that an IDC problem occurs, where the interference assistance information includes at least one of the following: per-bandwidth part BWP interference assistance information; and per-physical resource block PRB interference assistance information.

According to a fifth aspect, a terminal is provided, where the terminal includes a processor and a memory, and the memory stores a program or instructions executable on the processor. When the program or the instructions are executed by the processor, the steps of the method according to the first aspect are implemented.

According to a sixth aspect, a terminal is provided, including a processor and a communication interface, where the communication interface is configured to report interference assistance information to a network-side device in a case that an in-device coexistence IDC problem occurs, where the interference assistance information includes at least one of the following: per-bandwidth part BWP interference assistance information; and per-physical resource block PRB interference assistance information.

According to a seventh aspect, a network-side device is provided, where the network-side device includes a processor and a memory, and a program or instructions executable on the processor are stored in the memory. When the program or the instructions are executed by the processor, the steps of the method according to the second aspect are implemented.

According to an eighth aspect, a network-side device is provided, including a processor and a communication interface, where the communication interface is configured to receive interference assistance information reported by a terminal in a case that an IDC problem occurs, where the interference assistance information includes at least one of the following: per-bandwidth part BWP interference assistance information; and per-physical resource block PRB interference assistance information.

According to a ninth aspect, a communication system is provided, including a terminal and a network-side device, where the terminal can be configured to execute the steps of the interference assistance information reporting method according to the first aspect, and the network-side device can be configured to execute the steps of the interference assistance information reporting method according to the second aspect.

According to a tenth aspect, a readable storage medium is provided, where a program or instructions are stored in the readable storage medium, and when the program or the instructions are executed by a processor, the steps of the method according to the first aspect are implemented, or the steps of the method according to the second aspect are implemented.

According to an eleventh aspect, a chip is provided, where the chip includes a processor and a communication interface, the communication interface is coupled to the processor, and the processor is configured to run a program or instructions to implement the method according to the first aspect or implement the method according to the second aspect.

According to a twelfth aspect, a computer program/program product is provided, where the computer program/program product is stored in a storage medium, and the computer program/program product is executed by at least one processor to implement the steps of the interference assistance information reporting method according to the first aspect or the second aspect.

In the embodiments of this application, in a case that an IDC problem occurs, the terminal reports the interference assistance information to the network side to assist the network in handling the IDC problem. The interference assistance information reported by the terminal is per-BWP and/or per-PRB, that is, the interference assistance information reported by the terminal is fined down to a BWP and/or PRB, so that the network side can handle IDC problems based on finer-grained interference assistance information, thereby improving a resource utilization rate.

### BRIEF DESCRIPTION OF DRAWINGS

FIG. 1 is a structural diagram of a wireless communication system to which the embodiments of this application are applicable;
FIG. 2 is a first schematic flowchart of interaction of an interference assistance information reporting method according to an embodiment of this application;
FIG. 3 is a second schematic flowchart of interaction of an interference assistance information reporting method according to an embodiment of this application;
FIG. 4 is a first schematic structural diagram of an interference assistance information reporting apparatus according to an embodiment of this application;
FIG. 5 is a second schematic structural diagram of an interference assistance information reporting apparatus according to an embodiment of this application;
FIG. 6 is a schematic structural diagram of a communication device according to an embodiment of this application;
FIG. 7 is a schematic diagram of a hardware structure of a terminal according to an embodiment of this application; and
FIG. 8 is a schematic structural diagram of a network-side device according to an embodiment of this application.

### DESCRIPTION OF EMBODIMENTS

The following clearly describes the technical solutions in the embodiments of this application with reference to the accompanying drawings in the embodiments of this application. Apparently, the described embodiments are only some rather than all of the embodiments of this application. All other embodiments obtained by persons of ordinary skill in the art based on the embodiments of this application shall fall within the protection scope of this application.

In the specification and claims of this application, the terms such as "first" and "second" are intended to distinguish between similar objects but do not necessarily indicate a specific order or sequence. It should be understood that the terms used in this way is interchangeable in appropriate circumstances so that the embodiments of this application can be implemented in other orders than the order illustrated or described herein, and "first" and "second" are usually for distinguishing same-type objects but not limiting the number of objects, for example, there may be one or more first objects. In addition, "and/or" in this specification and claims indicates at least one of connected objects, and the symbol "/" generally indicates that the associated objects are in an "or" relationship.

It should be noted that techniques described in the embodiments of this application are not limited to a long term evolution (Long Term Evolution, LTE)/LTE-advanced (LTE-Advanced, LTE-A) system, and may also be applied to various wireless communication systems, for example, code division multiple access (Code Division Multiple Access, CDMA), time division multiple access (Time Division Multiple Access, TDMA), frequency division multiple access (Frequency Division Multiple Access, FDMA), orthogonal frequency division multiple access (Orthogonal Frequency Division Multiple Access, OFDMA), single-carrier frequency-division multiple access (Single-carrier Frequency Division Multiple Access, SC-FDMA), and other systems. The terms "system" and "network" in the embodiments of this application are usually used interchangeably. Techniques described herein may be used in the aforementioned systems and radio technologies, and may also be used in other systems and radio technologies. In the following descriptions, a new radio (New Radio, NR) system is described for an illustration purpose, and NR terms are used in most of the following descriptions, although these technologies may also be applied to other applications than an NR system application, for example, the 6th generation (6^{th} Generation, 6G) communication system.

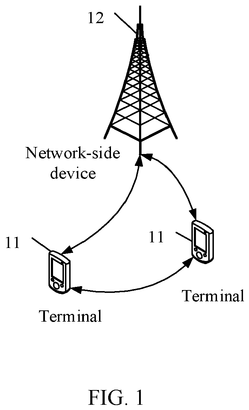

FIG. 1 is a block diagram of a wireless communication system to which the embodiments of this application are applicable. The wireless communication system includes a terminal 11 and a network-side device 12. The terminal 11 may be a terminal-side device, such as a mobile phone, a tablet computer (Tablet Personal Computer), a laptop computer (Laptop Computer) or a notebook computer, a personal digital assistant (Personal Digital Assistant, PDA), a palmtop computer, a netbook, an ultra-mobile personal computer (ultra-mobile personal computer, UMPC), a mobile Internet device (Mobile Internet Device, MID), an augmented reality (augmented reality, AR)/virtual reality (virtual reality, VR) device, a robot, a wearable device (Wearable Device), vehicle user equipment (VUE), pedestrian user equipment (PUE), a smart home device (a home device with wireless communication function, such as a refrigerator, a television, a washing machine, or a furniture), a game console, a personal computer (personal computer, PC), a teller machine, a self-service machine, or the like. The wearable device includes: a smart watch, a wrist band, smart earphones, smart glasses, smart jewelry (smart bracelet, smart wristband, smart ring, smart necklace, smart anklet, smart ankle bracelet, or the like), smart wristband, smart clothing, and the like. It should be noted that a specific type of the terminal 11 is not limited in the embodiments of this application. The network-side device 12 may include an access network device or a core network device, where the access network device 12 may also be referred to as a radio access network device, a radio access network (Radio Access Network, RAN), a radio access network function, or a radio access network unit. The access network device 12 may include a base station, a WLAN access point or a Wi-Fi node, or the like. The base station may be referred to as a NodeB, an evolved NodeB (eNB), an access point, a base transceiver station (Base Transceiver Station, BTS), a radio base station, a radio transceiver, a basic service set (Basic Service Set, BSS), an extended service set (Extended Service Set, ESS), a home NodeB, a home evolved NodeB, a transmission and reception point (Transmitting Receiving Point, TRP), or another appropriate term in the art. Provided that a same technical effect is achieved, the base station is not limited to a specific technical term. It should be noted that in the embodiments of this application, the base station in the NR system is merely used as an example, and a specific type of the base station is not limited.

A same terminal may be equipped with a variety of different wireless transceivers, such as LTE, 5G, Wi-Fi, Bluetooth, GNSS, and so on. Because multiple transceivers are extremely close inside the terminal, a receiver of the terminal may be interfered by a transmitter of the terminal at adjacent frequencies or harmonic frequencies. Such interference may come from a same or different radio access technologies (Radio Access Technology, RAT).

When an IDC problem occurs in the terminal, the terminal can report a 3GPP frequency affected by IDC to a network-side device. Based on frequency information reported by the terminal, the network-side device can resolve the IDC problem by deleting the affected frequency (such as by inter-frequency switching or removing a serving cell corresponding to a frequency band). However, if the network side deletes the whole frequency, frequency domain resources available to the terminal are reduced, thereby reducing a resource utilization rate.

Therefore, the network side requires finer-grained interference assistance information to prevent the network side from deleting the whole frequency to handle IDC problems, so as to increase frequency domain resources available to the UE.

In a 5G system, the terminal may support only one relatively small working bandwidth (for example, 5MHz), while one cell on the network side supports a relatively large bandwidth (for example, 100MHz), and a small bandwidth part on which the terminal works in the large bandwidth is considered as a bandwidth part (Bandwidth part, BWP).

The network-side device may configure one or more BWPs for the terminal, and activate or deactivate a BWP to change a BWP on which the terminal can work.

Generally, the network-side device may configure one default BWP. When the terminal works on another BWP in the cell, the network-side device may configure one timer for the terminal working on another BWP in the cell. When the timer expires, the terminal switches back to the default BWP.

The following describes in detail the interference assistance information reporting method provided in the embodiments of this application by using some embodiments and application scenarios thereof with reference to the accompanying drawings.

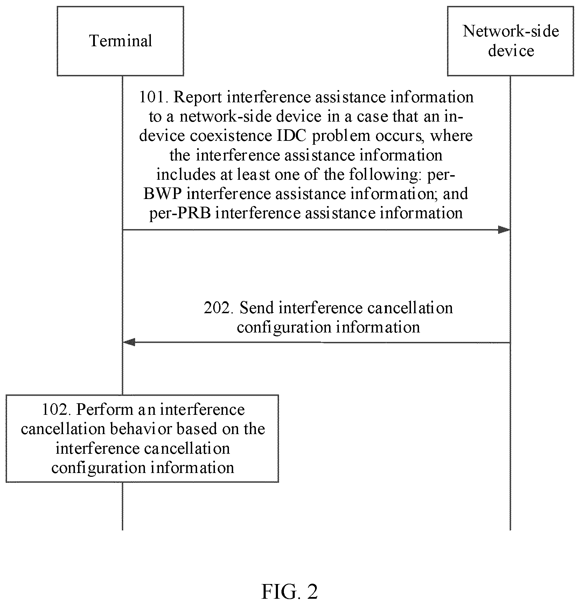

FIG. 2 is a first schematic flowchart of interaction in one embodiment of an interference assistance information reporting method according to an embodiment of this application. As shown in FIG. 2, the method provided in this embodiment includes the following steps.

Step 101: A terminal reports interference assistance information to a network-side device in a case that an IDC problem occurs, where the interference assistance information includes at least one of the following: per-bandwidth part BWP interference assistance information; and per-physical resource block PRB interference assistance information.

Specifically, when a receiver of the terminal receives interference from a transmitter to cause an IDC problem, the terminal reports the interference assistance information to the network side to assist the network in handling the IDC problem. Alternatively, when a transmitter of the terminal interferes with a receiver and an IDC problem occurs, the terminal reports the interference assistance information to the network side to assist the network in handling the IDC problem. Therefore, the interference assistance information reported by the terminal plays an important role in solving the IDC problem.

In addition, it should be noted that the terminal can report the interference assistance information to the network side when the IDC problem occurs and the terminal itself cannot solve the problem.

The interference assistance information reported by the terminal includes at least one of the following: per-bandwidth part BWP interference assistance information; and per-physical resource block PRB interference assistance information. After the terminal reports the per-BWP and/or per-PRB interference assistance information, the network side can determine an interfering BWP and/or PRB or an interfered-with BWP or PRB based on the per-BWP and/or per-PRB interference assistance information, so as to handle the IDC problem.

For example, when an IDC problem occurs in a terminal A, the terminal A reports interference assistance information to the network side. The interference assistance information includes: interference occurs on BWP1. Based on the interference assistance information, the network side can indicate the terminal to stop sending or receiving data on BWP1, or indicate switching to another BWP, so that the terminal A uses another BWP resource without interference for communication.

In the method of the foregoing embodiment, in a case that an IDC problem occurs, the terminal reports the interference assistance information to the network side to assist the network in handling the IDC problem. The interference assistance information reported by the terminal is per-BWP and/or per-PRB, that is, the interference assistance information reported by the terminal is fined down to BWP and/or PRB, so that the network side can handle IDC problems based on finer-grained interference assistance information, thereby improving a resource utilization rate.

Optionally, the per-BWP interference assistance information is used to inform the network-side device of unavailable-BWP information or BWP information affected by IDC, or the per-BWP interference assistance information is used to inform the network-side device of available-BWP information. The per-BWP interference assistance information may be one or more of the following:
BWP identification information; cell identification information; frequency identification information; bandwidth information; frequency domain starting position information; BWP bitmap; and configuration index information for candidate BWP information.

It should be noted that the per-BWP interference assistance information reported by the terminal may be one or more BWP information elements. Each BWP information element may correspond to one or more BWP resources. A BWP resource corresponding to each BWP information element may be represented by a BWP identifier, or represented by cell identification information and BWP identification information, or represented by frequency domain starting position information and bandwidth information, or represented by frequency identification information and bandwidth information, or the like. Optionally, each BWP information element may correspond to a specific frequency, or a specific frequency band, or a specific cell group, or a specific frequency band combination, or a specific cell, or the like.

Optionally, the following example may be a specific example of the BWP information element described above.

For example, the per-BWP interference assistance information may carry a cell (cell) ID and a BWP ID, which are used to indicate that a bandwidth part BWP corresponding to the BWP ID configured on a cell corresponding to the cell ID is an unavailable BWP resource. It should be noted that the foregoing unavailable BWP resource may be a frequency domain resource that is evaluated and determined by the terminal itself to be unusable for uplink or downlink data transmission. Alternatively, the per-BWP interference assistance information may carry a cell ID and a BWP ID, which are used to indicate that a bandwidth part BWP corresponding to the BWP ID configured on a cell corresponding to the cell ID is a BWP resource affected by IDC. In this case, the terminal may further indicate whether the bandwidth part BWP is an interfering party or an interfered-with party. Specifically, the per-BWP interference assistance information may be a BWP list = {BWP 1, BWP 2, BWP 3}. In this case, it can be used to indicate that frequency domain resources corresponding to BWP ID = 1, 2, 3 on all serving cells are unavailable BWP resources. Alternatively, the per-BWP interference assistance information may be a cell list = {cell 1, cell 2, cell 3}. In this case, it may be used to indicate that all BWPs configured on serving cells corresponding to cell ID = 1, 2, 3 are unavailable BWP resources. Alternatively, the per-BWP interference assistance information may be a BWP list = {BWP 1 (cell 1, cell 2), BWP 2 (cell 2, cell 3)} . In this case, it is used to indicate that a frequency domain resource of BWP ID = 1 configured in a serving cell corresponding to cell ID = 1, 2 and that of BWP ID = 2 configured in serving cells corresponding to cell ID = 2, 3 are unavailable BWP resources. Alternatively, the per-BWP interference assistance information may be a cell list = {cell 1(BWP 1, BWP 2), cell 2 (BWP 2, BWP 3)}. In this case, it is used to indicate that frequency domain resources of BWP ID = 1, 2 configured in a serving cell corresponding to cell ID = 1 and frequency domain resources of BWP ID = 2, 3 configured in a serving cell corresponding to cell ID = 2 are unavailable BWP resources. Other combination examples are not described one by one.

As another example, the per-BWP interference assistance information may carry frequency identification information ARFCN and bandwidth information W to indicate that frequency domain resources corresponding to (frequency corresponding to ARFCN, (frequency + W) corresponding to ARFCN), or ((frequency - W/2) corresponding to ARFCN, (frequency + W/2) corresponding to ARFCN), or ((frequency - W) corresponding to ARFCN, frequency corresponding to ARFCN) are unavailable resources.

As another example, the per-BWP interference assistance information may carry frequency domain starting position information and bandwidth information W, which are used to indicate that frequency domain resources corresponding to (frequency f corresponding to the frequency domain starting position information, f + W), or (f - W/2, f + W/2), or (f - W, f) are unavailable resources.

As another example, the per-BWP interference assistance information may carry a BWP bitmap. A bit of the BWP bitmap corresponds to a specific BWP. In one case, the bitmap may be designed as mapping BWPs to bits of the bitmap one by one in ascending order of cell IDs and in ascending order of BWP IDs corresponding to a same cell ID. For example, the terminal is configured with serving cells cell 1 and cell 2, where cell 1 is configured with BWP1 and BWP2, and cell 2 is configured with BWP1. Then, a length of the BWP bitmap is 3 (that is, being equal to the total number of BWPs configured by the terminal), the first bit of the bitmap corresponds to BWP1 configured for cell 1, the second bit of the bitmap corresponds to BWP2 configured for cell 1, and the third bit of the bitmap corresponds to BWP1 configured for cell 2. In another case, the bitmap may be designed as mapping BWPs to bits in the bitmap one by one according to a configuration order of candidate BWPs. For example, the network-side device provides the terminal with candidate BWP information for detecting an IDC problem, and BWP information carried in the information includes BWP1 of cell 1 and BWP1 of cell 2, so the length of the BWP bitmap is 2 (that is, being equal to the total number of candidate BWPs configured for the terminal), the first bit of the bitmap corresponds to BWP1 configured for cell 1, and the second bit of the bitmap corresponds to BWP1 configured for cell 2. For the foregoing bitmap design, a specific value of bit can be used to inform the network side whether a BWP corresponding to the bit is an unavailable BWP or a BWP affected by IDC. For example, the protocol can specify that when the bit value is "1", it is used to inform the network-side device that a BWP corresponding to the bit is an unavailable BWP; or the protocol can specify that when the bit value is "1", it is used to inform the network-side device that a BWP corresponding to the bit is affected by IDC. In addition, the terminal can also carry additional information to indicate whether the BWP is an interfering party or an interfered-with party. For example, the terminal further additionally carries one interference direction bitmap, the length of this bitmap is equal to the length of the foregoing BWP bitmap, and a bit of this bitmap are used to indicate whether a BWP corresponding to the bit is an interfering party or an interfered-with party. For example, a BWP bitmap is {1, 0, 1}, the first bit corresponds to BWP1 of cell 1, the second bit corresponds to BWP2 of cell 1, and the third bit corresponds to BWP1 of cell 2. A bit with a value being 1 is used to indicate that a corresponding BWP is a BWP affected by IDC. The interference direction bitmap additionally carried by the UE is {1, 0, 0}. The first bit corresponds to BWP1 of cell 1, and the value of 1 is used to indicate that the BWP is an interfering party. The second bit corresponds to BWP2 of cell 1; because the BWP indicates that this BWP is not affected by IDC, the network-side device can ignore a bit corresponding to this BWP in the interference direction bitmap. The third bit corresponds to BWP1 of cell 2, and the value of 0 is used to indicate that the BWP is an interfered-with party.

As another example, the per-BWP interference assistance information may carry configuration index information for a candidate BWP. For example, the network-side device provides the terminal with candidate BWP information for detecting an IDC problem, and the BWP information carried in the information includes BWP1 of cell 1 and BWP1 of cell 2. The terminal associates the candidate BWP with the configuration index according to an agreed rule. The agreed rule may be based on a provision order or configuration order of the candidate BWP. In the foregoing example, the terminal may associate BWP1 of cell 1 with a configuration index 1 and BWP1 of cell 2 with a configuration index 2. The terminal reports the configuration index of the BWP to inform whether the BWP corresponding to the configuration index is a BWP affected by IDC.

Optionally, the per-PRB interference assistance information is used to inform the network-side device of unavailable-PRB information, or is used to inform the network-side device of PRB information affected by IDC, or the per-PRB interference assistance information is used to inform the network-side device of available-PRB information. The per-PRB interference assistance information may be one or more of the following:
PRB starting position information, where the PRB starting position information may be denoted by PRB ID or PRB index (index);
PRB ending position information, where the PRB ending position information may be denoted by PRB ID or PRB index;
PRB quantity information;
bandwidth information; where optionally, the bandwidth information may be used to determine the number of PRBs; for example, the network side may determine a subcarrier spacing (sub-carrier space, SCS) based on a BWP where a PRB resource is located, and then convert a bandwidth indicated by the bandwidth information into the number of PRBs;
PRB bitmap; and
configuration index of candidate PRB information.

The per-PRB interference assistance information further includes one or more of the following:
BWP identification information; where the BWP identifier is used to indicate a bandwidth part BWP to which a frequency domain resource corresponding to the PRB information belongs, so as to inform the network-side device of a PRB resource that is unavailable or affected by IDC or available on a bandwidth part corresponding to the BWP ID;
cell identification information; where the cell identifier is used to indicate a cell to which a frequency domain resource corresponding to the PRB information belongs, so as to inform the network-side device of a PRB resource that is unavailable or affected by IDC or available on a frequency domain resource corresponding to the cell ID; and
frequency band identification information; where the frequency band identification information is used to indicate a frequency band to which a frequency domain resource corresponding to the PRB information belongs, so as to inform the network-side device of a PRB resource that is unavailable or affected by IDC or available on a frequency domain resource corresponding to the frequency band identifier.

It should be noted that the per-PRB interference assistance information reported by the terminal may be one or more PRB information elements. Each PRB information element may indicate one PRB, or a plurality of PRBs, such as a plurality of continuous PRBs. A PRB resource corresponding to each PRB information element may be represented by PRB starting position information, or by a PRB ID, or by a PRB index. In this case, the PRB information element corresponds to one PRB resource. Each PRB information element may alternatively be represented by PRB starting position information and PRB ending position information, or represented by PRB starting position information and PRB quantity information, or represented by PRB starting position information and bandwidth information, or represented by PRB ending position information and PRB quantity information, or represented by PRB ending position information and bandwidth information. In this case, the PRB information element corresponds to a plurality of PRB resources, for example, a plurality of continuous PRBs.

Optionally, each PRB information element may correspond to a specific frequency, or a specific frequency band, or a specific cell group, or a specific frequency band combination, or a specific cell, or the like.

Optionally, the following example may be a specific example of the PRB information element described above.

As an example, the per-PRB interference assistance information may be PRB starting position information and PRB ending position information. In this case, it is used to indicate that all frequency domain resources from a PRB corresponding to the PRB starting position information to a PRB corresponding to the PRB ending position information are unavailable PRB resources. Alternatively, the per-PRB interference assistance information may be PRB starting position information and PRB quantity information (for example, N). In this case, it is used to indicate that N continuous PRBs starting from a PRB corresponding to the PRB starting position information are unavailable PRB resources. Alternatively, the PRB information may be PRB ending position information and PRB quantity information (for example, N). In this case, it is used to indicate that N continuous PRBs until a PRB corresponding to the PRB ending position information are candidate PRB resources for detecting an IDC problem.

As another example, the per-PRB interference assistance information may carry configuration index information for a candidate PRB resource. For example, the network-side device provides the terminal with candidate PRB information for detecting an IDC problem. The candidate PRB information may carry a plurality of PRB information elements, and each PRB information element corresponds to one specific PRB or a plurality of specific PRBs. The terminal needs to detect whether there is IDC problem on a PRB resource corresponding to each PRB information element. In a case that an IDC problem occurs, the terminal reports a configuration index corresponding to the PRB resource to the network-side device. Specifically, the terminal associates the candidate PRB resource with the configuration index according to an agreed rule. The agreed rule may be based on a provision order or configuration order of the candidate PRB. In the foregoing example, the terminal can associate the PRB resource corresponding to each PRB information element with the configuration index. For example, a configuration index 1 associated with the first PRB information element, a configuration index 2 associated with the second PRB information element, and the like are carried in the PRB information for detecting an IDC problem.

As another example, the per-PRB interference assistance information may be a PRB bitmap. For example, bits of the PRB bitmap correspond to specific candidate PRB resources. In another case, the bitmap may be designed as mapping candidate PRB resources to bits in the bitmap one by one according to a configuration order of candidate PRB resources. For example, the network-side device provides the terminal with candidate PRB information for detecting an IDC problem. The candidate PRB information may carry a plurality of PRB information elements, and each PRB information element corresponds to one specific PRB or a plurality of specific PRBs. The terminal needs to detect whether there is IDC problem on a PRB resource corresponding to each PRB information element. In the foregoing example, the bits of the PRB bitmap correspond to the PRB information elements. For example, the protocol can specify that when the bit value is "1", it is used to inform the network-side device that a PRB corresponding to the bit is an unavailable PRB; or the protocol can specify that when the bit value is "1", it is used to inform the network-side device that a PRB corresponding to the bit is affected by IDC. In another case, the bitmap may be designed as mapping PRB resources to bits in the bitmap one by one according to a configuration order of PRB IDs or PRB indexes. In this example, one bit corresponds to a PRB resource of a specific PRB ID or PRB index. When a bit is set to a specific value, it is used to indicate that a PRB resource corresponding to the bit is an unavailable PRB resource, or it is used to indicate that a PRB resource corresponding to the bit is affected by IDC, or that a PRB resource corresponding to the bit is an available PRB resource. The protocol can specify a specific meaning of a bit being set to a specific value.

In an embodiment, the interference assistance information reporting method further includes:
obtaining, by the terminal, reporting configuration information for the interference assistance information.

Optionally, the terminal reports the interference assistance information to the network-side device based on the reporting configuration information for the interference assistance information; where
the reporting configuration information includes at least one of the following:
enabling control information for reporting the interference assistance information;
granularity configuration information for reporting the interference assistance information; and
target candidate resource information.

Specifically, the terminal determines how to report the interference assistance information according to the obtained reporting configuration information. The reporting configuration information includes at least one of the following: enabling control information for reporting the interference assistance information; granularity configuration information for reporting the interference assistance information; and target candidate resource information. That is, the terminal needs to report the per-BWP and/or per-PRB interference assistance information according to the obtained enabling control information for reporting the interference assistance information, and/or the obtained granularity configuration information for reporting the interference assistance information, and/or the obtained target candidate resource information, so as to achieve the purpose of reporting the finer-grained interference assistance information to assist the network-side device in solving the IDC problem and improve the resource utilization rate.

Optionally, the reporting configuration information may include explicit enabling control information or implicit enabling control information. For example, the reporting configuration information includes an explicit indication field, and the information indicated in the indication field is enabling control information, or the reporting configuration information includes granularity configuration information and/or target candidate resource information, and the enabling control information can be implicitly indicated through the granularity configuration information and/or the target candidate resource information. For example, the reporting configuration information includes granularity configuration information, and in this case, the terminal is indicated to enable per-BWP and/or per-PRB interference assistance information reporting.

In the foregoing implementation, the terminal obtains the reporting configuration information for the interference assistance information, where the reporting configuration information includes at least one of the following: enabling control information for reporting the interference assistance information; granularity configuration information for reporting the interference assistance information; and target candidate resource information. The terminal reports the interference assistance information based on the reporting configuration information, and performing per-BWP and/or per-PRB interference assistance information reporting, so as to implement interference assistance information reporting with finer granularity.

In an embodiment, the enabling control information is used to indicate at least one of the following information:
that the terminal is to enable or not enable per-BWP and/or per-PRB interference assistance information reporting; and
that the terminal is to enable or not enable per-BWP and/or per-PRB interference assistance information reporting for a target candidate resource.

Specifically, the terminal can be indicated by the enabling control information in the reporting configuration information to enable or not enable per-BWP and/or per-PRB interference assistance information reporting; and/or to enable or not enable per-BWP and/or per-PRB interference assistance information reporting for a target candidate resource.

In a case that the reporting configuration information carries the enabling control information and the carried enabling control information is set to a specific value, the terminal considers itself being configured to allow reporting of the interference assistance information. Optionally, in a case that the reporting configuration information carries the enabling control information and the carried enabling control information is set to a specific value, the terminal may enable per-BWP and/or per-PRB interference assistance information reporting; or enable per-BWP and/or per-PRB interference assistance information reporting for a target candidate resource. That is, by obtaining the enabling control information in the reporting configuration information, the terminal can determine to enable what level of interference assistance information reporting, or determine to enable what level of interference assistance information reporting for which resources, thus implementing finer-grained interference assistance information reporting.

In the foregoing implementation, the enabling control information is used to indicate the terminal to enable per-bandwidth part BWP and/or per-physical resource block PRB interference assistance information reporting; or the enabling control information is used to indicate the terminal to enable per-BWP and/or per-PRB interference assistance information reporting on a resource corresponding to the target candidate resource information. That is, by obtaining the enabling control information in the reporting configuration information, the terminal can determine to enable what level of interference assistance information reporting, or determine to enable what level of interference assistance information reporting on which resources, thus implementing finer-grained interference assistance information reporting.

It should be noted that the enabling control information may be explicit enabling control information or implicit enabling control information.

As an example of explicit enabling control information, the form of enabling control information is any one of the following:
an indication field with a first length; and
a first bitmap.

Specifically, the enabling control information carried in the reporting configuration information may be an indication field with a first length, and a value of the indication field can indicate the terminal to enable or not enable per-BWP and/or per-PRB interference assistance information reporting; where in this case, the enabling control information is equivalent to per-UE enable control indication information; or to enable or not enable per-BWP and/or per-PRB interference assistance information reporting for a target candidate resource; where in this case, the enabling control information is equivalent to per-resource (such as per frequency or per BWP or per PRB) enabling control information.

For example, the value of the indication field of the enabling control information is represented by bits of a first length, for example, a one-bit indication field idc-indication-r18 of the enabling control information is used. When the indication field idc-indication-r18 of the enabling control information is set to true, the terminal is configured to allow per-BWP and/or per-PRB interference assistance information reporting. In this instance, per-BWP and/or per-PRB interference assistance information reporting is enabled by default for all configured candidate resources (such as candidate frequency resources for detecting an IDC problem) of the terminal. An exemplary signaling configuration is as follows:

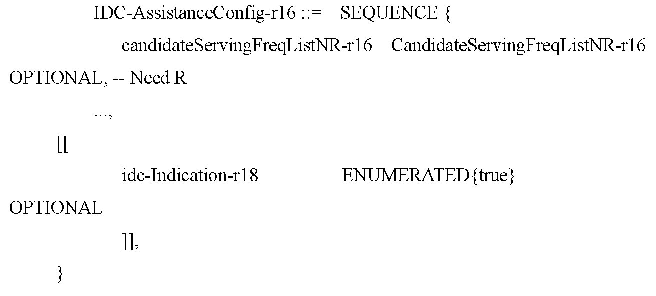

The Idc-Indication-r18 field is used to indicate whether the terminal is configured to enable transmitting IDC interference assistance information (InDeviceCoexindication) to the network side at the PRB level/BWP level.

The enabling control information can alternatively be represented by a first bitmap, and bits of the first bitmap are used to indicate to enable or not enable per-BWP and/or per-PRB interference assistance information reporting for a target candidate resource. According to the following signaling configuration, the reporting configuration information for the interference assistance information carries a candidate frequency list for detecting an IDC problem, and bitmap information for indicating whether to enable or not enable per-BWP and/or per-PRB interference assistance information reporting on resources corresponding to the candidate frequency list. The n-th bit in the first bitmap corresponds to the n-th frequency in the candidate frequency list, and when the bit is set to a specific value, it is used to indicate that the frequency resource supports per-BWP and/or per-PRB interference assistance information reporting.

An exemplary signaling configuration is as follows:

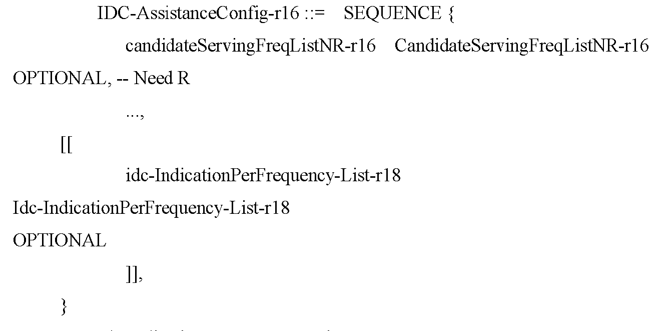

It should be noted that the foregoing specific value may be configured by the network-side device or predefined by a protocol.

Optionally, in a case that the reporting configuration information carries the granularity configuration information for reporting the interference assistance information and/or the target candidate resource information for detecting an IDC problem, the terminal considers itself being configured to allow reporting of the interference assistance information, where the target candidate resource information for detecting an IDC problem may be a newly introduced information field. Further, the terminal considers itself being configured to allow reporting of finer-grained interference assistance information, for example, the terminal considers itself being configured to allow reporting of per-BWP and/or per-PRB interference assistance information. For example, in a case that the reporting configuration information carries the candidate BWP information for detecting an IDC problem, the terminal considers itself being configured to allow reporting of per-BWP interference assistance information. In a case that the reporting configuration information carries the candidate PRB information for detecting an IDC problem, the terminal considers itself being configured to allow reporting of per-PRB interference assistance information.

As an example of implicit enabling control information, the reporting configuration information for the interference assistance information carries target candidate resource information (such as a candidate frequency list) for detecting an IDC problem, where the target candidate resource information may be a newly introduced information field, which is used to indicate enabling per-BWP/per-PRB interference assistance information reporting on frequency resources contained in the candidate frequency list. Optionally, according to the following signaling configuration, compared with the conventional mechanism, the reporting configuration information for the interference assistance information carries a new candidate frequency list CandidateServingFreqListNR-r18 for detecting an IDC problem. In this case, the terminal considers that per-BWP/per-PRB interference assistance information reporting has been enabled for frequency resources included in CandidateServingFreqListNR-r18 while per-BWP/per-PRB interference assistance information reporting has not been enabled for frequency resources included in CandidateServingFreqListNR-r16.

For example, a signaling configuration is as follows:

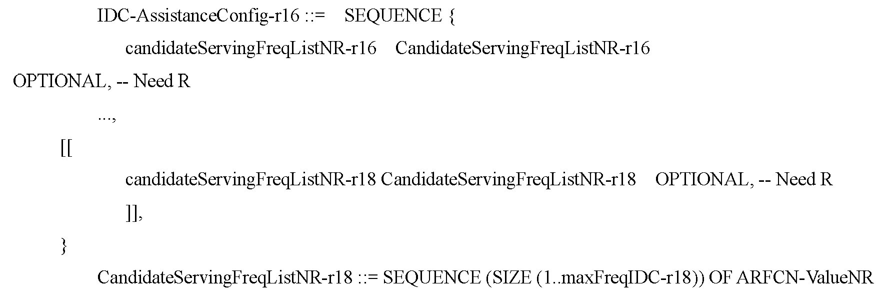

The granularity configuration information for reporting the interference assistance information may be one or more of the following:
a first indication field for reporting per-BWP interference assistance information; and
a second indication field for reporting per-PRB interference assistance information.

Optionally, the first indication field is used to indicate at least one of the following information:
that the terminal is to enable or not enable per-BWP interference assistance information reporting; and
that the terminal is to enable or not enable per-BWP interference assistance information reporting for a target candidate resource.

The second indication field is used to indicate at least one of the following information:
that the terminal is to enable or not enable per-PRB interference assistance information reporting; and
that the terminal is to enable or not enable per-PRB interference assistance information reporting for a target candidate resource.

Specifically, in a case that the first indication field is carried in the reporting configuration information and the carried first indication field is set to a specific value, the terminal considers itself being configured to allow reporting of per-BWP interference assistance information, or enable per-BWP interference assistance information reporting for the target candidate resource.

In a case that the second indication field is carried in the reporting configuration information and the carried second indication field is set to a specific value, the terminal considers itself being configured to allow reporting of per-PRB interference assistance information, or enable per-PRB interference assistance information reporting for the target candidate resource.

Optionally, the first indication field is in any one of the following forms:
an indication field with a second length; and
a second bitmap.

Optionally, the second indication field is in any one of the following forms:
an indication field with a third length; and
a third bitmap.

As an example, the reporting configuration information for the interference assistance information carries the granularity configuration information. If the first indication field for reporting per-BWP interference assistance information and the second indication field for reporting per-PRB interference assistance information are both a 1-bit indication field with a value being 0, it means that reporting of per-BWP interference assistance information and per-PRB interference assistance information is not enabled; or, if the first indication field and the second indication field are both a 1-bit indication field with a value being 1, it means that reporting of per-BWP interference assistance information and per-PRB interference assistance information is enabled; or, if the first indication field and the second indication field are 1-bit indication fields with a value being 0 and 1 respectively, it means that reporting of per-BWP interference assistance information is not enabled, and reporting of per-PRB interference assistance information is enabled; or, if the first indication field and the second indication field are 1-bit indication fields with a value being 1 and 0 respectively, it means that reporting of per-BWP interference assistance information is enabled, and reporting of per-PRB interference assistance information is not enabled. According to the following signaling configuration, if the reporting configuration information contains a candidate frequency list for detecting an IDC problem and the first indication field for reporting per-BWP interference assistance information, the terminal may consider that per-BWP interference assistance information reporting is enabled on all frequencies contained in CandidateServingFreqListNR-r16.

For example, a signaling configuration is as follows:

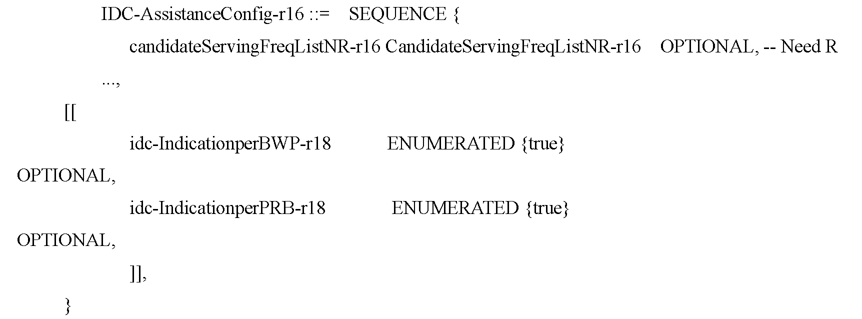

As another example, the first indication field for reporting per-BWP interference assistance information and the second indication field for reporting per-PRB interference assistance information are both one bitmap.

Specifically, bits in the second bitmap are used to indicate whether to enable or not enable per-BWP interference assistance information reporting for the target candidate resource. According to the following signaling configuration, the reporting configuration information for the interference assistance information carries a candidate frequency list for detecting an IDC problem, and bitmap information for indicating whether to enable or not enable per-BWP interference assistance information reporting on resources corresponding to the candidate frequency list. The n-th bit in the second bitmap corresponds to the n-th frequency in the candidate frequency list, and when the bit is set to a specific value, it is used to indicate that the frequency resource supports per-BWP interference assistance information reporting.

Bits in the third bitmap are used to indicate whether to enable or not enable per-PRB interference assistance information reporting for the target candidate resource. According to the following signaling configuration, the reporting configuration information for the interference assistance information carries a candidate frequency list for detecting an IDC problem, and bitmap information for indicating whether to enable or not enable per-PRB interference assistance information reporting on resources corresponding to the candidate frequency list. The n-th bit in the third bitmap corresponds to the n-th frequency in the candidate frequency list, and when the bit is set to a specific value, it is used to indicate that the frequency resource supports per-PRB interference assistance information reporting.

For example, a signaling configuration is as follows:

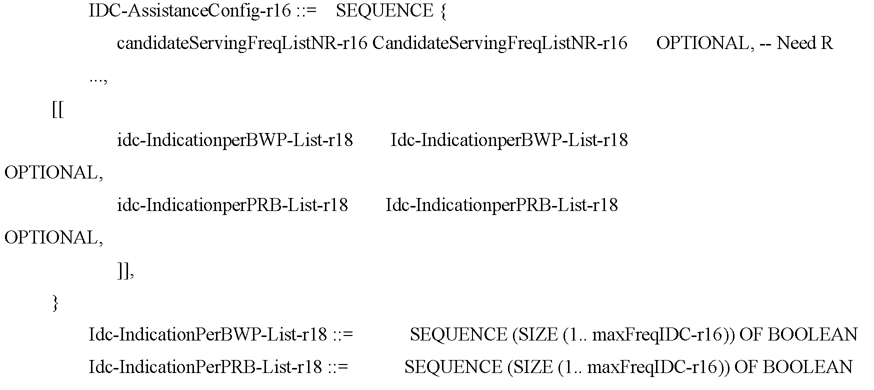

The target candidate resource information for detecting an IDC problem may be one or more of the following:
the target candidate resource information includes at least one of the following:
candidate frequency information;
candidate BWP information; and
candidate PRB information.

Optionally, the candidate BWP information includes at least one of the following:
BWP identification information; cell identification information; frequency identification information; bandwidth information; frequency domain starting position information; BWP bitmap; and frequency band identification information; and
for example, a signaling configuration is as follows:

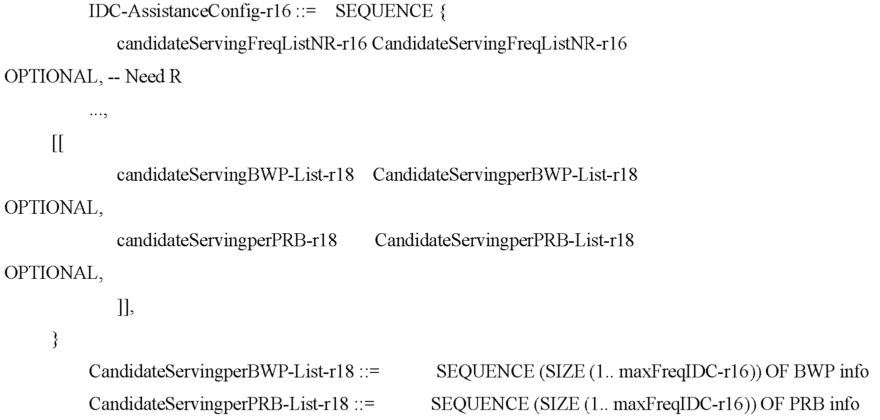

Optionally, the candidate PRB information includes at least one of the following: PRB starting position information; PRB ending position information; PRB quantity information; bandwidth information; and PRB bitmap.

Optionally, the candidate PRB information further includes at least one of the following:
frequency information, BWP information, cell information, and frequency band information.

Specifically, for example, the candidate frequency information for detecting an IDC problem may be a candidate frequency list configured by the network-side device, and in a case that any frequency in the candidate frequency list is affected by IDC, the terminal reports the interference assistance information. Different from network-configured candidate frequencies in the existing mechanism, the candidate frequency information may be a newly introduced information field. In a case that the network-side device provides the candidate frequency information, the terminal may report the per-BWP and/or per-PRB interference assistance information in a case that any candidate frequency is affected by IDC.

For example, the candidate BWP information for detecting an IDC problem may be a BWP information list configured by the network-side device, and the terminal reports interference assistance information in a case that a frequency domain resource corresponding to any BWP information in the BWP information list are affected by IDC. The candidate BWP information includes at least one of the following: BWP identification information; cell identification information; frequency identification information; bandwidth information; frequency domain starting position information; BWP bitmap; and frequency band identification information. A bit of the BWP bitmap corresponds to a specific BWP. Specifically, BWPs may be mapped to bits in the bitmap one by one in ascending order of cell IDs and in ascending order of BWP IDs corresponding to a same cell ID.

It should be noted that the candidate BWP information for detecting an IDC problem configured by the network side may contain one or more BWP information elements. Each BWP information element may correspond to one or more BWP resources. A BWP resource corresponding to each BWP information element may be represented by a BWP identifier, or represented by cell identification information and BWP identification information, or represented by frequency domain starting position information and bandwidth information, or represented by frequency identification information and bandwidth information, or the like.

Optionally, each BWP information element may correspond to a specific frequency, or a specific frequency band, or a specific cell group, or a specific frequency band combination, or a specific cell, or the like.

Optionally, the following example may be a specific example of each BWP information element described above.

For example, the candidate BWP information may be a BWP list = {BWP 1, BWP 2, BWP 3}; in this case, the terminal considers frequency domain resources corresponding to BWP ID= 1, 2, 3 in all serving cells as candidate resources for detecting an IDC problem. Alternatively, the candidate BWP information may be a cell list = {cell 1, cell 2, cell 3 }; in this case, the terminal considers that all BWPs configured in the serving cells corresponding to cell ID = 1, 2, 3 are candidate BWP resources for detecting an IDC problem. Alternatively, the candidate BWP information may be a BWP list = {BWP 1(cell 1, cell 2), BWP 2 (cell 2, cell 3)}; in this case, the terminal considers that frequency domain resources of BWP ID = 1 configured in serving cells corresponding to cell ID = 1, 2 and frequency domain resources of BWP ID = 2 configured in serving cells corresponding to cell ID = 2, 3 are candidate BWP resources for detecting an IDC problem. Alternatively, the candidate BWP information may be a cell list = {cell 1(BWP 1, BWP 2), cell 2 (BWP 2, BWP 3)}; in this case, the terminal considers that frequency domain resources of BWP ID = 1, 2 configured in a serving cell corresponding to cell ID = 1 and frequency domain resources of BWP ID = 2, 3 configured in a serving cell corresponding to cell ID = 2 are candidate BWP resources for detecting an IDC problem. Other combination examples are not described one by one.

As another example, the candidate BWP information may be a BWP list = {(BWP1, BWP2)}, where BWP1 is represented by frequency domain starting position information and bandwidth information. In this case, the terminal considers frequency domain resources corresponding to (frequency corresponding to the frequency domain starting position information, frequency corresponding to the frequency domain starting position information + bandwidth) as candidate BWP resources for detecting an IDC problem. Alternatively, BWP1 is identified by a frequency identifier and bandwidth information, such as a frequency identification parameter ARFCN and bandwidth information W. In this case, the terminal considers frequency domain resources corresponding to (frequency corresponding to ARFCN, frequency corresponding to ARFCN + W), or (frequency corresponding to ARFCN - W/2, frequency corresponding to ARFCN + W/2), or (frequency corresponding to ARFCN - W, frequency corresponding to ARFCN) as candidate BWP resources for detecting an IDC problem. Other combination examples are not described one by one.

As another example, the candidate BWP information may be a BWP bitmap. A bit of the BWP bitmap corresponds to a specific BWP. The bitmap may be designed as mapping BWPs to bits in the bitmap one by one in ascending order of cell IDs and in ascending order of BWP IDs corresponding to a same cell ID. For example, the terminal is configured with serving cells cell 1 and cell 2, where cell 1 is configured with BWP1 and BWP2, and cell 2 is configured with BWP1. Then, a length of the BWP bitmap is 3 (that is, being equal to the total number of BWPs configured by the terminal), the first bit of the bitmap corresponds to BWP1 configured for cell 1, the second bit of the bitmap corresponds to BWP2 configured for cell 1, and the third bit of the bitmap corresponds to BWP1 configured for cell 2. For the foregoing bitmap design, a specific value of bit can be used to inform the terminal whether a BWP corresponding to the bit is a candidate BWP resource for detecting an IDC problem. For example, the protocol can specify that when the bit value is "1", it is used to inform the terminal that a BWP corresponding to the bit is a candidate BWP resource for detecting an IDC problem; or the protocol may specify that when the bit value is "0", it is used to inform the terminal that a BWP corresponding to the bit is not a candidate BWP resource for detecting an IDC problem. For example, a BWP bitmap is {1, 0, 1}, the first bit corresponds to BWP1 of cell 1, the second bit corresponds to BWP2 of cell 1, and the third bit corresponds to BWP1 of cell 2. A bit with a value being 1 is used to indicate that a corresponding BWP is a candidate BWP resource for detecting an IDC problem. That is, BWP1 of cell 1 and BWP1 of cell 2 are candidate BWP resources for detecting an IDC problem, while BWP2 of cell 1 is not a candidate BWP resource for detecting an IDC problem.

Optionally, the candidate PRB information for detecting an IDC problem may be a PRB information list configured by the network-side device, and the terminal reports interference assistance information in a case that a frequency domain resource corresponding to any PRB information in the PRB information list is affected by IDC. The candidate PRB information may be one or more of the following:
PRB starting position information, where the PRB starting position information may be represented by PRB ID or PRB index;
PRB ending position information, where the PRB ending position information may be represented by PRB ID or PRB index;
PRB quantity information;
bandwidth information, where optionally, the bandwidth information may be used to determine the number of PRBs; for example, the UE may determine a SCS based on a BWP where a PRB resource is located, and then convert a bandwidth indicated by the bandwidth information into the number of PRBs; or convert the bandwidth information into the number of PRBs based on a reference SCS; and
PRB bitmap.

It should be noted that the candidate PRB information for detecting an IDC problem configured by the network side may contain one or more PRB information elements. Each PRB information element may indicate one PRB, or a plurality of PRBs, such as a plurality of continuous PRBs. A PRB resource corresponding to each PRB information element may be represented by PRB starting position information, or by a PRB ID, or by a PRB index, or by a PRB bitmap, or the like. In this case, the PRB information element corresponds to one PRB resource. Each PRB information element may alternatively be represented by PRB starting position information and PRB ending position information, or represented by PRB starting position information and PRB quantity information, or represented by PRB starting position information and bandwidth information, or represented by PRB quantity information and PRB ending position information, or represented by PRB ending position information and PRB quantity information, or represented by PRB ending position information and bandwidth information, or represented by a bitmap, or the like. In this case, the PRB information element corresponds to a plurality of PRB resources, for example, a plurality of continuous PRBs. Optionally, each PRB information element may correspond to a specific frequency, or a specific frequency band, or a specific cell group, or a specific frequency band combination, or a specific cell, or the like.

Optionally, the following example may be a specific example of each PRB information element described above.

As an example, the candidate PRB information may be PRB starting position information and PRB ending position information. In this case, it is used to indicate that all frequency domain resources from a PRB corresponding to the PRB starting position information to a PRB corresponding to the PRB ending position information are candidate PRB resources for detecting an IDC problem. Alternatively, the candidate PRB information may be PRB starting position information and PRB quantity information (for example, N). In this case, the terminal may consider N continuous PRBs from a PRB corresponding to the PRB starting position information as candidate PRB resources for detecting an IDC problem. Alternatively, the candidate PRB information may be PRB ending position information and PRB quantity information (for example, N). In this case, the terminal may consider N continuous PRBs until a PRB corresponding to the PRB ending position information as candidate PRB resources for detecting an IDC problem.

As another example, the candidate PRB information may be a PRB bitmap. For example, bits of the PRB bitmap correspond to specific candidate PRB resources. The bitmap may be designed as mapping PRB resources to bits in the bitmap one by one according to a configuration order of PRB IDs or PRB indexes. In this example, one bit corresponds to a PRB resource of a specific PRB ID or PRB index. When the bit is set to a specific value, it is used to indicate that a PRB resource corresponding to the bit is a candidate PRB resource for detecting an IDC problem. For example, the protocol can specify that when the bit value is " 1", it is used to inform the terminal that a PRB corresponding to the bit is a candidate PRB resource for detecting an IDC problem. The protocol may specify that when the bit value is "0", it is used to inform the terminal that a PRB corresponding to the bit is not a candidate PRB resource for detecting an IDC problem.

It should be noted that the network-side device may further configure frequency information (such as a frequency identifier) and/or BWP information (BWP identifier) and/or cell information (cell identifier) and/or frequency band information (frequency band identifier) corresponding to the candidate PRB information.

The BWP identifier is used to indicate a bandwidth part BWP to which a frequency domain resource corresponding to the PRB information belongs, so as to inform the network-side device of a candidate PRB resource for detecting an IDC problem on a bandwidth part corresponding to the BWP ID.

Cell identification information, where the cell identifier is used to indicate a cell to which a frequency domain resource corresponding to the PRB information belongs, so as to inform the network-side device of a candidate PRB resource for detecting an IDC problem on a frequency domain resource corresponding to the cell ID.

Frequency band identification information, where the frequency band identification information is used to indicate a frequency band to which a frequency domain resource corresponding to the PRB information belongs, so as to inform the network-side device of a candidate PRB resource for detecting an IDC problem on a frequency domain resource corresponding to the frequency band identifier.

In addition, it should be noted that frequency domain resources corresponding to the candidate BWP information and the candidate PRB information may be frequency domain resources corresponding to serving frequency of the terminal or frequency domain resources corresponding to non-serving frequency of the terminal.

Optionally, before the network-side device provides the reporting configuration information for the interference assistance information, the method further includes: sending, by the terminal, capability information to the network-side device.

The capability information includes at least one of the following:
first capability indication information for supporting per-BWP interference assistance information reporting; and
second capability indication information for supporting per-PRB interference assistance information reporting.

Specifically, the terminal may report one or more of the following capability information to the network-side device:
capability indication information for supporting per-BWP interference assistance information reporting; where for example, when the terminal reports the capability information, if the first capability indication information is carried and the first capability indication information carried is set to an agreed value, the terminal is indicated to support reporting of per-BWP interference assistance information; and
capability indication information for supporting per-PRB interference assistance information reporting; where for example, when the terminal reports the capability information, if the second capability indication information is carried and the second capability indication information carried is set to an agreed value, the terminal is indicated to support reporting of per-PRB interference assistance information.

In the foregoing implementation, the terminal reports the capability information for supporting per-BWP and/or per-PRB interference assistance information reporting, and the network-side device may configure interference assistance information reporting for the terminal based on the capability information reported by the terminal, so as to implement low complexity.

In an embodiment, as shown in FIG. 2, the method further includes:
receiving, by the terminal, interference eliminating configuration information sent by the network-side device; and performing, by the terminal, an interference eliminating behavior based on the interference eliminating configuration information, where the interference eliminating configuration information includes at least one of the following: BWP interference eliminating configuration information and PRB interference eliminating configuration information.

Optionally, the BWP interferenc eliminating configuration information is used to indicate the terminal to stop sending or receiving data on a BWP resource corresponding to the BWP interference eliminating configuration information, or the BWP interference eliminating configuration information is used to indicate the terminal to perform BWP switching; and the PRB interference eliminating configuration information is used to indicate the terminal to stop sending or receiving data on a PRB resource corresponding to the PRB interference eliminating configuration information.

Specifically, the terminal obtains interference eliminating configuration information, and performs an interference eliminating behavior based on the interference eliminating configuration information. The interference eliminating configuration information is determined by the network side based on the interference assistance information reported by the terminal and sent to the terminal. The interference eliminating configuration information is used to assist the terminal in handling IDC problems. The interference eliminating configuration information includes one or more of the following information:
BWP interference eliminating configuration information, where the BWP interference eliminating configuration information is used to indicate the terminal to stop sending or receiving data on a BWP resource corresponding to the BWP interference eliminating configuration information; or the BWP interference eliminating configuration information is used to indicate the terminal to perform BWP switching; and
PRB interference eliminating configuration information, where the PRB interference eliminating configuration information is used to indicate the terminal to stop sending or receiving data on a PRB resource corresponding to the PRB interference eliminating configuration information.

In the foregoing implementation, in a case that an IDC problem occurs, the terminal reports the interference assistance information to the network side to assist the network in handling IDC problems. The network-side device sends the interference eliminating configuration information based on the interference assistance information, and the terminal performs an interference eliminating behavior based on the interference eliminating configuration information. The interference assistance information reported by the terminal is per-BWP and/or per-PRB, that is, the interference assistance information reported by the terminal is fined down to BWP and/or PRB, so that the network side can handle IDC problems based on the finer-grained interference assistance information, thereby improving the resource utilization rate.

In this embodiment of this application, the network-side device controls the terminal through the enabling control information to report the per-BWP and/or per-PRB interference assistance information. The enabling control information may be explicit control information or implicit control information, including, for example:
Manner 1 (explicit): A number of bits indicate the terminal whether to enable per-BWP and/or per-PRB interference assistance information reporting, or whether to enable per-BWP and/or per-PRB interference assistance information reporting for a target candidate resource (which can be indicated by an existing candidate frequency list or a new candidate frequency list).
Manner 2 (explicit): Target candidate frequency information and a bitmap indicate the terminal whether to enable per-BWP and/or per-PRB interference assistance information reporting, or whether to enable per-BWP and/or per-PRB interference assistance information reporting for a target candidate resource (which can be indicated by an existing candidate frequency list or a new candidate frequency list).
Manner 3 (implicit): Candidate resource information not for per-BWP and/or per-PRB interference assistance information reporting is added to an R16 candidate frequency list. An R18 candidate frequency list is newly added, and frequencies for supporting per-BWP and/or per-PRB interference assistance information reporting are added to the newly added R18 frequency list. Which frequencies support per-BWP and/or per-PRB interference assistance information reporting are distinguished by using different lists.

In addition, the granularity configuration information may be further used to implicitly indicate whether to enable per-BWP and/or per-PRB interference assistance information reporting, or whether to enable per-BWP and/or per-PRB interference assistance information reporting for a target candidate resource (which can be indicated by an existing candidate frequency list or a new candidate frequency list).

In an embodiment, in a case that the reporting configuration information includes an enable control field and a value of the enable control field is a first target value, if an IDC problem occurs, the terminal reports per-BWP and/or per-PRB interference assistance information; or
in a case that the reporting configuration information includes an enable control field and a value of the enable control field is a first target value, if an IDC problem occurs on a resource corresponding to the target candidate resource information, the terminal reports per-BWP and/or per-PRB interference assistance information; or
in a case that the reporting configuration information includes an enable control field and a value of the enable control field is a first bitmap, if an IDC problem occurs, the terminal reports per-BWP and/or per-PRB interference assistance information based on the first bitmap and the target candidate resource.

Optionally, that the terminal reports per-BWP and/or per-PRB interference assistance information based on the reporting configuration information includes at least one of the following:
in a case that the reporting configuration information includes the enabling control information, the terminal reports per-BWP and/or per-PRB interference assistance information based on the enabling control information; or
in a case that the reporting configuration information includes the granularity configuration information, the terminal reports per-BWP and/or per-PRB interference assistance information based on the granularity configuration information; or
in a case that the reporting configuration information includes the target candidate resource information, the terminal reports per-BWP and/or per-PRB interference assistance information based on the target candidate resource information.

Optionally, that in a case that the reporting configuration information includes the enabling control information, the terminal reports per-BWP and/or per-PRB interference assistance information based on the enabling control information includes:
if a value of the enabling control information is a first target value, the terminal reports per-BWP and/or per-PRB interference assistance information; or
if the value of the enabling control information is a first target value and an IDC problem occurs in a frequency domain resource corresponding to the target candidate frequency information, the terminal reports per-BWP and/or per-PRB interference assistance information; or
if the value of the enabling control information is a first bitmap, the terminal reports per-BWP and/or per-PRB interference assistance information based on the first bitmap and the target candidate frequency information.

Optionally, that in a case that the reporting configuration information includes the granularity configuration information, the terminal reports per-BWP and/or per-PRB interference assistance information based on the granularity configuration information includes:
if a value of the granularity configuration information is a second target value, the terminal reports per-BWP and/or per-PRB interference assistance information; or
if the value of the granularity configuration information is a second target value and an IDC problem occurs in a frequency domain resource corresponding to the target candidate frequency information, the terminal reports per-BWP and/or per-PRB interference assistance information; or
if the value of the granularity configuration information is a second bitmap, the terminal reports per-BWP and/or per-PRB interference assistance information based on the second bitmap and the target candidate frequency information.

Herein, the second bitmap includes the second bitmap corresponding to the first indication field and the third bitmap corresponding to the second indication field in the granularity configuration information in the foregoing embodiment.

Optionally, in a case that the reporting configuration information includes the target candidate frequency information, the target candidate frequency information includes at least one of the following: first candidate frequency information, and candidate BWP information or candidate PRB information. That the terminal reports per-BWP and/or per-PRB interference assistance information based on the target candidate frequency information includes:
if the target candidate resource information includes the first candidate frequency information, the terminal reports per-BWP and/or per-PRB interference assistance information in a case that any candidate frequency in candidate frequencies corresponding to the first candidate resource information is affected by IDC;
if the target candidate resource information includes candidate BWP information, the terminal reports per-BWP interference assistance information in a case that a frequency domain resource corresponding to any BWP information in the candidate BWP information is affected by IDC; and
the terminal reports per-PRB interference assistance information in a case that a frequency domain resource corresponding to any PRB information in the candidate PRB information is affected by IDC.

Optionally, that the terminal reports the per-BWP and/or per-PRB interference assistance information according to the first bitmap and the target candidate frequency information includes:
the terminal determines, based on the first bitmap and the target candidate frequency information, whether to enable per-BWP and/or per-PRB interference assistance information reporting for a frequency domain resource with an IDC problem; and
in a case that per-BWP and/or per-PRB interference assistance information reporting is enabled for the frequency domain resource with an IDC problem, the terminal reports the per-BWP and/or per-PRB interference assistance information.

Optionally, the determining whether to enable per-BWP and/or per-PRB interference assistance information reporting for a frequency domain resource with an IDC problem includes:
in a case that a value in the first bitmap corresponding to the frequency domain resource with an IDC problem is a third target value, the terminal determines to enable per-BWP and/or per-PRB interference assistance information reporting for the frequency domain resource with an IDC problem.

Optionally, that the terminal reports the per-BWP and/or per-PRB interference assistance information according to the second bitmap and the target candidate frequency information includes:
the terminal determines, based on the second bitmap and the target candidate frequency information, whether to enable per-BWP and/or per-PRB interference assistance information reporting for a frequency domain resource with an IDC problem; and
in a case that per-BWP and/or per-PRB interference assistance information reporting is enabled for the frequency domain resource with an IDC problem, the terminal reports the per-BWP and/or per-PRB interference assistance information.

Optionally, the determining whether to enable per-BWP and/or per-PRB interference assistance information reporting for a frequency domain resource with an IDC problem includes:
in a case that a value in the second bitmap corresponding to the frequency domain resource with an IDC problem is a fourth target value, the terminal determines to enable per-BWP and/or per-PRB interference assistance information reporting for the frequency domain resource with an IDC problem.

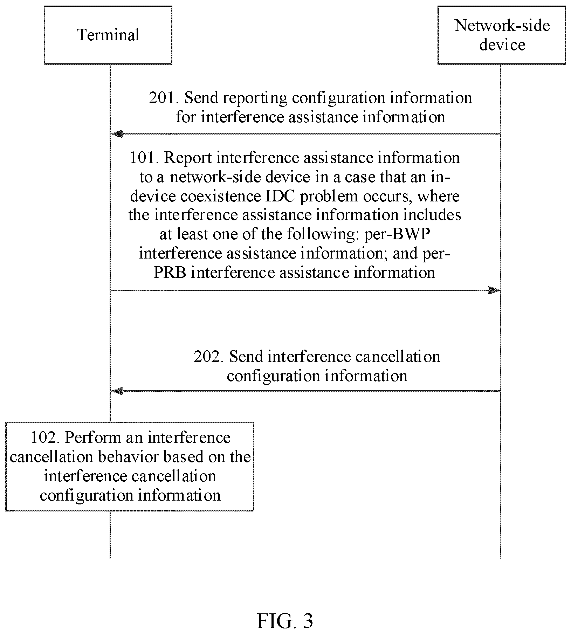

FIG. 3 is a second schematic flowchart of interaction of an interference assistance information reporting method according to an embodiment of this application. As shown in FIG. 3, the interference assistance information reporting method includes the following steps.

A network-side device receives interference assistance information reported by a terminal in a case that an IDC problem occurs, where the interference assistance information includes at least one of the following: per-bandwidth part BWP interference assistance information; and per-physical resource block PRB interference assistance information.

For steps 101, 202, and 102 in FIG. 3, refer to the embodiments of the method on the terminal side, which are not repeated herein.

Optionally, the method further includes:
Step 201: The network-side device sends reporting configuration information for the interference assistance information to the terminal; where the reporting configuration information for the interference assistance information includes at least one of the following:
enabling control information for reporting the interference assistance information;
granularity configuration information for reporting the interference assistance information; and
target candidate resource information.

Optionally, the enabling control information is used to indicate at least one of the following information:
that the terminal is to enable or not enable the per-bandwidth part BWP interference assistance information reporting and/or per-physical resource block PRB interference assistance information; and
that the terminal is to enable or not enable the per-bandwidth part BWP interference assistance information reporting and/or per-physical resource block PRB interference assistance information for a target candidate resource.

Optionally, the enabling control information is in at least one of the following forms:
an indication field with a first length; and
a first bitmap.

Optionally, the granularity configuration information includes at least one of the following indications:
a first indication field for reporting per-BWP interference assistance information; and
a second indication field for reporting per-PRB interference assistance information.

Optionally, the first indication field is used to indicate at least one of the following information:
that the terminal is to enable or not enable per-BWP interference assistance information reporting; and
that the terminal is to enable or not enable per-BWP interference assistance information reporting for a target candidate resource.

The second indication field is used to indicate at least one of the following information:
that the terminal is to enable or not enable per-PRB interference assistance information reporting; and
that the terminal is to enable or not enable per-PRB interference assistance information reporting for a target candidate resource.

Optionally, the first indication field is in any one of the following forms:
an indication field with a second length; and
a second bitmap.

The second indication field is in any one of the following forms:
an indication field with a third length; and
a third bitmap.

Optionally, the target candidate resource information includes at least one of the following:
candidate frequency information;
candidate BWP information; and
candidate PRB information.

Optionally, the candidate BWP information includes at least one of the following:
BWP identification information; cell identification information; frequency identification information; bandwidth information; frequency domain starting position information; BWP bitmap; and frequency band identification information; and
the candidate PRB information includes at least one of the following: PRB starting position information; PRB ending position information; PRB quantity information; bandwidth information; and PRB bitmap.

Optionally, the candidate PRB information further includes at least one of the following:
frequency information, BWP information, cell information, and frequency band information.

Optionally, the per-BWP interference assistance information includes at least one of the following: BWP identification information; cell identification information; frequency identification information; bandwidth information; frequency domain starting position information; BWP bitmap; and configuration index information for candidate BWP information; and
the per-PRB interference assistance information includes at least one of the following: PRB starting position information; PRB ending position information; PRB quantity information; bandwidth information; PRB bitmap; and configuration index information for candidate PRB information.

Optionally, the per-PRB interference assistance information further includes at least one of the following: BWP identification information; cell identification information; and frequency band identification information.

Optionally, the method further includes:
receiving, by the network-side device, capability information sent by the terminal.

The capability information includes at least one of the following:
first capability indication information for supporting per-BWP interference assistance information reporting; and
second capability indication information for supporting per-PRB interference assistance information reporting.

Optionally, the method further includes:
sending, by the network-side device, interference eliminating configuration information to the terminal; where the interference eliminating configuration information includes at least one of the following: BWP interference eliminating configuration information and PRB interference eliminating configuration information.

Optionally, the BWP interference eliminating configuration information is used to indicate the terminal to stop sending or receiving data on a BWP resource corresponding to the BWP interference eliminating configuration information, or the BWP interference eliminating configuration information is used to indicate the terminal to perform BWP switching; and the PRB interference eliminating configuration information is used to indicate the terminal to stop sending or receiving data on a PRB resource corresponding to the PRB interference eliminating configuration information.

For the interference assistance information reporting method provided in the embodiments of this application, the execution body may be an interference assistance information reporting apparatus. In this embodiment of this application, the interference assistance information reporting method being performed by the interference assistance information reporting apparatus is used as an example to describe the interference assistance information reporting apparatus provided in the embodiments of this application.

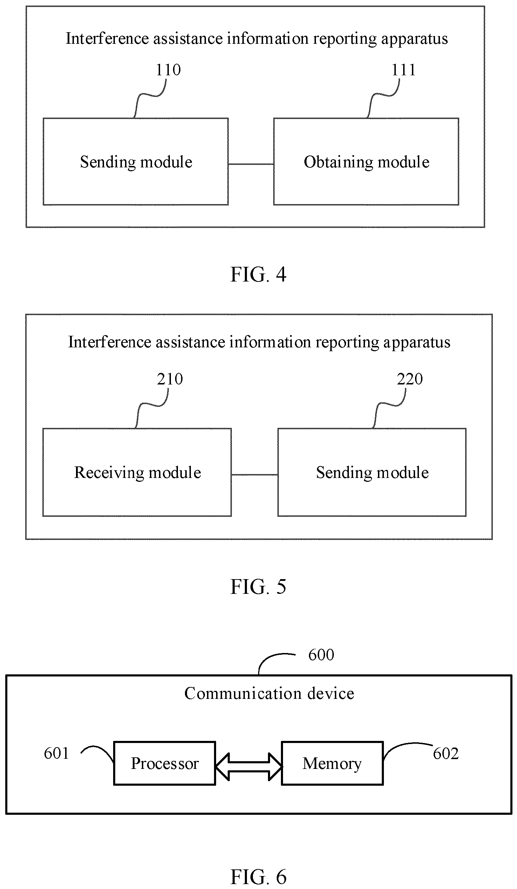

FIG. 4 is a first schematic structural diagram of an interference assistance information reporting apparatus according to an embodiment of this application. As shown in FIG. 4, the interference assistance information reporting apparatus provided in this embodiment includes:
a sending module 110, configured to report interference assistance information to a network-side device in a case that an in-device coexistence IDC problem occurs, where the interference assistance information includes at least one of the following: per-bandwidth part BWP interference assistance information; and per-physical resource block PRB interference assistance information.

Optionally, the following is further included:
an obtaining module 111, configured to obtain reporting configuration information for the interference assistance information before the terminal reports the interference assistance information to the network-side device.

The sending module 110 is specifically configured to:
report, for the terminal, the interference assistance information to the network-side device based on the reporting configuration information for the interference assistance information; where
the reporting configuration information for the interference assistance information includes at least one of the following:
   enabling control information for reporting the interference assistance information;
   granularity configuration information for reporting the interference assistance information; and
   target candidate resource information.

Optionally, the enabling control information is used to indicate at least one of the following information:
that the terminal is to enable or not enable per-BWP and/or per-PRB interference assistance information reporting; and
that the terminal is to enable or not enable per-BWP and/or per-PRB interference assistance information reporting for a target candidate resource.

Optionally, the enabling control information is in at least one of the following forms:
an indication field with a first length; and
a first bitmap.

Optionally, the granularity configuration information includes at least one of the following indications:
a first indication field for reporting per-BWP interference assistance information; and
a second indication field for reporting per-PRB interference assistance information.

Optionally, the first indication field is used to indicate at least one of the following information:
that the terminal is to enable or not enable per-BWP interference assistance information reporting; and
that the terminal is to enable or not enable per-BWP interference assistance information reporting for a target candidate resource.

The second indication field is used to indicate at least one of the following information:
that the terminal is to enable or not enable per-PRB interference assistance information reporting; and
that the terminal is to enable or not enable per-PRB interference assistance information reporting for a target candidate resource.

Optionally, the first indication field is in any one of the following forms:
an indication field with a second length; and
a second bitmap.

The second indication field is in any one of the following forms:
an indication field with a third length; and
a third bitmap.

Optionally, the target candidate resource information includes at least one of the following:
candidate frequency information;
candidate BWP information; and
candidate PRB information.

Optionally, the candidate BWP information includes at least one of the following:
BWP identification information; cell identification information; frequency identification information; bandwidth information; frequency domain starting position information; BWP bitmap; and frequency band identification information; and
the candidate PRB information includes at least one of the following: PRB starting position information; PRB ending position information; PRB quantity information; bandwidth information; and PRB bitmap.

Optionally, the candidate PRB information further includes at least one of the following:
frequency information, BWP information, cell information, and frequency band information.

Optionally, the per-BWP interference assistance information includes at least one of the following: BWP identification information; cell identification information; frequency identification information; bandwidth information; frequency domain starting position information; BWP bitmap; and configuration index information for candidate BWP information; and
the per-PRB interference assistance information includes at least one of the following: PRB starting position information; PRB ending position information; PRB quantity information; bandwidth information; PRB bitmap; and configuration index information for candidate PRB information.

Optionally, the per-PRB interference assistance information further includes at least one of the following: BWP identification information; cell identification information; and frequency band identification information.

Optionally, the sending module 110 is further configured to:
send capability information to the network-side device.

The capability information includes at least one of the following:
first capability indication information for supporting per-BWP interference assistance information reporting; and
second capability indication information for supporting per-PRB interference assistance information reporting.

Optionally, the obtaining module 111 is further configured to:
obtain interference eliminating configuration information sent by the network-side device.

Optionally, the apparatus further includes a processing module, configured to perform an interference eliminating behavior based on the interference eliminating configuration information, where the interference eliminating configuration information includes at least one of the following: BWP interference eliminating configuration information and PRB interference eliminating configuration information.

Optionally, the BWP interference eliminating configuration information is used to indicate the terminal to stop sending or receiving data on a BWP resource corresponding to the BWP interference eliminating configuration information, or the BWP interference eliminating configuration information is used to indicate the terminal to perform BWP switching; and the PRB interference eliminating configuration information is used to indicate the terminal to stop sending or receiving data on a PRB resource corresponding to the PRB interference eliminating configuration information.

The apparatus in this embodiment can be configured to execute the method in any one of the embodiments of the method on the terminal-side, and its specific implementation processes and technical effects are similar to those in the embodiments of the method on the terminal-side. For details, refer to the detailed descriptions in the embodiments of the method on the terminal-side, which is not repeated herein.

FIG. 5 is a second schematic structural diagram of an interference assistance information reporting apparatus according to an embodiment of this application. As shown in FIG. 4, the interference assistance information reporting apparatus provided in this embodiment includes:
a receiving module 210, configured to receive, for a terminal, interference assistance information reported by a terminal in a case that an IDC problem occurs, where the interference assistance information includes at least one of the following: per-bandwidth part BWP interference assistance information; and per-physical resource block PRB interference assistance information.

Optionally, the following is further included:
a sending module 220, configured to send reporting configuration information for the interference assistance information to the terminal; where the reporting configuration information for the interference assistance information includes at least one of the following:
enabling control information for reporting the interference assistance information;
granularity configuration information for reporting the interference assistance information; and
target candidate resource information.

Optionally, the enabling control information is used to indicate at least one of the following information:
that the terminal is to enable or not enable the per-bandwidth part BWP interference assistance information reporting and/or per-physical resource block PRB interference assistance information; and
that the terminal is to enable or not enable the per-bandwidth part BWP interference assistance information reporting and/or per-physical resource block PRB interference assistance information for a target candidate resource.

Optionally, the enabling control information is in at least one of the following forms:
an indication field with a first length; and
a first bitmap.

Optionally, the granularity configuration information includes at least one of the following indications:
a first indication field for reporting per-BWP interference assistance information; and
a second indication field for reporting per-PRB interference assistance information.

Optionally, the first indication field is used to indicate at least one of the following information:
that the terminal is to enable or not enable per-BWP interference assistance information reporting; and
that the terminal is to enable or not enable per-BWP interference assistance information reporting for a target candidate resource.

The second indication field is used to indicate at least one of the following information:
that the terminal is to enable or not enable per-PRB interference assistance information reporting; and
that the terminal is to enable or not enable per-PRB interference assistance information reporting for a target candidate resource.

Optionally, the first indication field is in any one of the following forms:
an indication field with a second length; and
a second bitmap.

The second indication field is in any one of the following forms:
an indication field with a third length; and
a third bitmap.

Optionally, the target candidate resource information includes at least one of the following:
candidate frequency information;
candidate BWP information; and
candidate PRB information.

Optionally, the candidate BWP information includes at least one of the following:
BWP identification information; cell identification information; frequency identification information; bandwidth information; frequency domain starting position information; BWP bitmap; and frequency band identification information; and
the candidate PRB information includes at least one of the following: PRB starting position information; PRB ending position information; PRB quantity information; bandwidth information; and PRB bitmap.

Optionally, the candidate PRB information further includes at least one of the following:
frequency information, BWP information, cell information, and frequency band information.

Optionally, the per-BWP interference assistance information includes at least one of the following: BWP identification information; cell identification information; frequency identification information; bandwidth information; frequency domain starting position information; BWP bitmap; and configuration index information for candidate BWP information; and
the per-PRB interference assistance information includes at least one of the following: PRB starting position information; PRB ending position information; PRB quantity information; bandwidth information; PRB bitmap; and configuration index information for candidate PRB information.

Optionally, the per-PRB interference assistance information further includes at least one of the following: BWP identification information; cell identification information; and frequency band identification information.

Optionally, the receiving module 210 is further configured to:
receive capability information sent by the terminal; where
the capability information includes at least one of the following:
   first capability indication information for supporting per-BWP interference assistance information reporting; and
   second capability indication information for supporting per-PRB interference assistance information reporting.

Optionally, the sending module 220 is further configured to:
send interference eliminating configuration information to the terminal; where the interference eliminating configuration information includes at least one of the following: BWP interference eliminating configuration information and PRB interference eliminating configuration information.

Optionally, the BWP interference eliminating configuration information is used to indicate the terminal to stop sending or receiving data on a BWP resource corresponding to the BWP interference eliminating configuration information, or the BWP interference eliminating configuration information is used to indicate the terminal to perform BWP switching; and the PRB interference eliminating configuration information is used to indicate the terminal to stop sending or receiving data on a PRB resource corresponding to the PRB interference eliminating configuration information.

The apparatus in this embodiment can be configured to execute the method in any one of the embodiments of the method on the network-side, and its specific implementation processes and technical effects are similar to those in the embodiments of the method on the network-side. For details, refer to the detailed descriptions in the embodiments of the method on the network-side, which is not repeated herein.

The interference assistance information reporting apparatus in this embodiment of the application may be an electronic device, such as an electronic device with an operating system, or a component in the electronic device, such as an integrated circuit or a chip. The electronic device may be a terminal or other devices than the terminal. For example, the terminal may include, but is not limited to, the types of the terminal 11 listed above, and other devices may be a server, a network attached storage (Network Attached Storage, NAS), and the like. This is not limited in the embodiments of this application.

The interference assistance information reporting apparatus provided in this embodiment of this application is capable of implementing the processes implemented in the method embodiments in FIG. 2 and FIG. 3, with the same technical effects achieved. To avoid repetition, details are not described herein again.

Optionally, as shown in FIG. 6, an embodiment of this application further provides a communication device 600, including a processor 601 and a memory 602. The memory 602 stores a program or instructions executable on the processor 601. For example, when the communication device 600 is a terminal and when the program or the instructions are executed by the processor 601, the steps of the foregoing embodiments of the interference assistance information reporting method are implemented, with the same technical effects achieved. When the communication device 600 is a network-side device and when the program or the instructions are executed by the processor 601, the steps of the foregoing embodiments of the interference assistance information reporting method are implemented, with the same technical effects achieved. To avoid repetition, details are not described herein again.

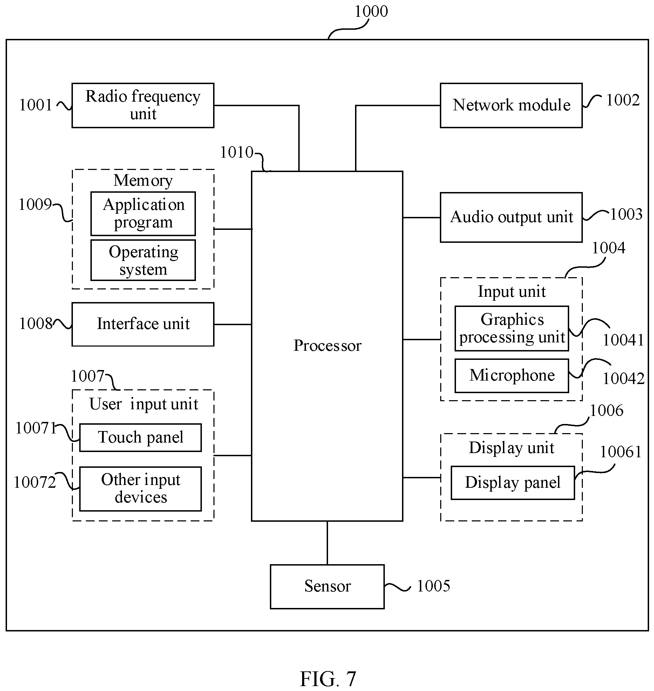

An embodiment of this application further provides a terminal, including a processor and a communication interface, where the communication interface is configured to report interference assistance information to a network-side device in a case that an in-device coexistence IDC problem occurs, where the interference assistance information includes at least one of the following: per-bandwidth part BWP interference assistance information; and per-physical resource block PRB interference assistance information. The terminal embodiments correspond to the foregoing terminal-side method embodiments, and the implementation processes and implementations of the foregoing method embodiments can be applied to the terminal embodiments, with the same technical effects achieved. Specifically, FIG. 7 is a schematic diagram of a hardware structure of a terminal for implementing the embodiments of this application.

The terminal 1000 includes but is not limited to at least part of components such as a radio frequency unit 1001, a network module 1002, an audio output unit 1003, an input unit 1004, a sensor 1005, a display unit 1006, a user input unit 1007, an interface unit 1008, a memory 1009, and a processor 1010.

Persons skilled in the art can understand that the terminal 1000 may further include a power supply (for example, a battery) supplying power to the components, and the power supply may be logically connected to the processor 1010 through a power management system. In this way, functions such as charge management, discharge management, and power consumption management are implemented by using the power management system. The structure of the terminal shown in FIG. 7 does not constitute any limitation on the terminal. The terminal may include more or fewer components than shown in the figure, or a combination of some components, or the components disposed differently. Details are not described herein again.

It can be understood that in this embodiment of this application, the input unit 1004 may include a graphics processing unit (Graphics Processing Unit, GPU) 10041 and a microphone 10042. The graphics processing unit 10041 processes image data of a still picture or video obtained by an image capture apparatus (such as a camera) in a video capture mode or an image capture mode. The display unit 1006 may include a display panel 10061, and the display panel 10061 may be configured in a form of a liquid crystal display, an organic light-emitting diode, and the like. The user input unit 1007 may include at least one of a touch panel 10071 and other input devices 10072. The touch panel 10071 is also referred to as a touchscreen. The touch panel 10071 may include two parts: a touch detection apparatus and a touch controller. The other input devices 10072 may include but are not limited to a physical keyboard, a function key (such as a volume control key or a power on/off key), a trackball, a mouse, a joystick, and the like. Details are not described herein.

In this embodiment of this application, the radio frequency unit 1001 receives downlink data from a network-side device, and then sends the downlink data to the processor 1010 for processing. In addition, the radio frequency unit 1001 may send uplink data to the network-side device. Generally, the radio frequency unit 1001 includes but is not limited to an antenna, at least one amplifier, a transceiver, a coupler, a low noise amplifier, a duplexer, and the like.

The memory 1009 may be configured to store software programs or instructions and various data. The memory 1009 may include a first storage area for storing a program or instructions and a second storage area for storing data. The first program or instruction storage area may store an operating system, an application program or instruction required by at least one function (for example, a sound playback function or an image playback function), and the like. In addition, the memory 1009 may include a volatile memory or a non-volatile memory, or the memory 1009 may include both a volatile memory and a non-volatile memory, including a high-speed random access memory, and may further include a non-volatile memory. The non-volatile memory may be a read-only memory (Read-Only Memory, ROM), a programmable read-only memory (Programmable ROM, PROM), an erasable programmable read-only memory (Erasable PROM, EPROM), an electrically erasable programmable read-only memory (Electrically EPROM, EEPROM), or a flash memory, The volatile memory can be a random access memory (Random Access Memory, RAM), a static random access memory (Static RAM, SRAM), a dynamic random access memory (Dynamic RAM, DRAM), a synchronous dynamic random access memory (Synchronous DRAM, SDRAM), a double data rate synchronous dynamic random access memory (Double Data Rate SDRAM, DDRSDRAM), an enhanced synchronous dynamic random access memory (Enhanced SDRAM, ESDRAM), a synchlink dynamic random access memory (Synch link DRAM, SLDRAM), and a direct rambus random access memory (Direct Rambus RAM, DRRAM). The memory 1009 in this embodiment of this application includes, but is not limited to, any other suitable types of memories, such as at least one disk storage device, a flash memory device, or another non-volatile solid-state storage device.

The processor 1010 may include one or more processing units. Optionally, an application processor and a modem processor may be integrated in the processor 1010. The application processor primarily processes operations involving an operating system, user interfaces, application programs or instructions, and the like. The modem processor primarily processes radio communication signals, for example, being a baseband processor. It can be understood that the modem processor may alternatively be not integrated in the processor 1010.

The radio frequency unit 1001 is configured to report interference assistance information to a network-side device in a case that an in-device coexistence IDC problem occurs, where the interference assistance information includes at least one of the following: per-bandwidth part BWP interference assistance information; and per-physical resource block PRB interference assistance information.

In the foregoing implementation, in a case that an IDC problem occurs, the terminal reports the interference assistance information to the network side to assist the network in handling the IDC problem. The interference assistance information reported by the terminal is per-BWP and/or per-PRB, that is, the interference assistance information reported by the terminal is fined down to BWP and/or PRB, so that the network side can handle IDC problems based on finer-grained interference assistance information, thereby improving a resource utilization rate.

Optionally, the radio frequency unit 1001 is configured to obtain reporting configuration information for the interference assistance information before the interference assistance information is reported to the network-side device.

Optionally, the radio frequency unit 1001 is specifically configured to:
report the interference assistance information to the network-side device based on the reporting configuration information for the interference assistance information; where
the reporting configuration information for the interference assistance information includes at least one of the following:
   enabling control information for reporting the interference assistance information;
   granularity configuration information for reporting the interference assistance information; and
   target candidate resource information.

In the foregoing implementation, the terminal obtains the reporting configuration information for the interference assistance information, where the reporting configuration information includes at least one of the following: enabling control information for reporting the interference assistance information; granularity configuration information for reporting the interference assistance information; and target candidate resource information. The terminal reports the interference assistance information based on the reporting configuration information, and performing per-BWP and/or per-PRB interference assistance information reporting, so as to implement interference assistance information reporting with finer granularity.

Optionally, the enabling control information is used to indicate at least one of the following information:
that the terminal is to enable or not enable per-BWP and/or per-PRB interference assistance information reporting; and
that the terminal is to enable or not enable per-BWP and/or per-PRB interference assistance information reporting for a target candidate resource.

Optionally, the enabling control information is in at least one of the following forms:
an indication field with a first length; and
a first bitmap.

Optionally, the granularity configuration information includes at least one of the following indications:
a first indication field for reporting per-BWP interference assistance information; and
a second indication field for reporting per-PRB interference assistance information.

Optionally, the first indication field is used to indicate at least one of the following information:
that the terminal is to enable or not enable per-BWP interference assistance information reporting; and
that the terminal is to enable or not enable per-BWP interference assistance information reporting for a target candidate resource.

The second indication field is used to indicate at least one of the following information:
that the terminal is to enable or not enable per-PRB interference assistance information reporting; and
that the terminal is to enable or not enable per-PRB interference assistance information reporting for a target candidate resource.

Optionally, the first indication field is in any one of the following forms:
an indication field with a second length; and
a second bitmap.

The second indication field is in any one of the following forms:
an indication field with a third length; and
a third bitmap.

Optionally, the target candidate resource information includes at least one of the following:
candidate frequency information;
candidate BWP information; and
candidate PRB information.

Optionally, the candidate BWP information includes at least one of the following:
BWP identification information; cell identification information; frequency identification information; bandwidth information; frequency domain starting position information; BWP bitmap; and frequency band identification information; and
the candidate PRB information includes at least one of the following: PRB starting position information; PRB ending position information; PRB quantity information; bandwidth information; and PRB bitmap.

Optionally, the candidate PRB information further includes at least one of the following:
frequency information, BWP information, cell information, and frequency band information.

Optionally, the per-BWP interference assistance information includes at least one of the following: BWP identification information; cell identification information; frequency identification information; bandwidth information; frequency domain starting position information; BWP bitmap; and a configuration index for a candidate BWP; and
the per-PRB interference assistance information includes at least one of the following: PRB starting position information; PRB ending position information; PRB quantity information; bandwidth information; PRB bitmap; and a configuration index for candidate PRB information.

Optionally, the per-PRB interference assistance information further includes at least one of the following: BWP identification information; cell identification information; and frequency band identification information.

Optionally, the radio frequency unit 1001 is further configured to:
send capability information to the network-side device.

The capability information includes at least one of the following:
first capability indication information for supporting per-BWP interference assistance information reporting; and
second capability indication information for supporting per-PRB interference assistance information reporting.

Optionally, the radio frequency unit 1001 is further configured to:
obtain interference eliminating configuration information sent by the network-side device.

The processor 1010 is configured to perform an interference eliminating behavior based on the interference eliminating configuration information, where the interference eliminating configuration information includes at least one of the following: BWP interference eliminating configuration information and PRB interference eliminating configuration information.

Optionally, the BWP interference eliminating configuration information is used to indicate the terminal to stop sending or receiving data on a BWP resource corresponding to the BWP interference eliminating configuration information, or the BWP interference eliminating configuration information is used to indicate the terminal to perform BWP switching; and the PRB interference eliminating configuration information is used to indicate the terminal to stop sending or receiving data on a PRB resource corresponding to the PRB interference eliminating configuration information.

An embodiment of this application further provides a network-side device, including a processor and a communication interface, where the communication interface is configured to receive interference assistance information reported by a terminal in a case that an IDC problem occurs, where the interference assistance information includes at least one of the following: per-bandwidth part BWP interference assistance information; and per-physical resource block PRB interference assistance information. The network-side device embodiments correspond to the foregoing network-side device method embodiments, and the implementation processes and implementations of the foregoing method embodiments can be applied to the network-side device embodiments, with the same technical effects achieved.

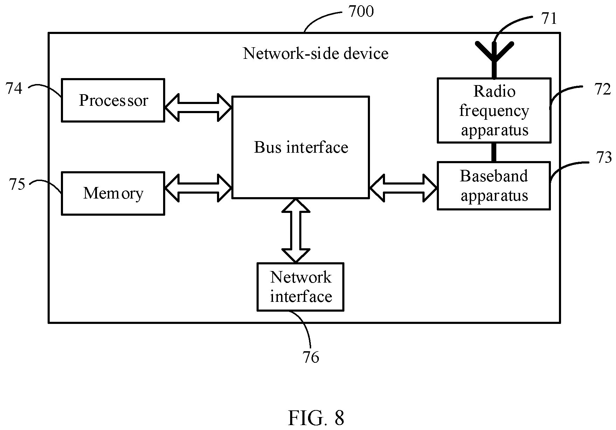

Specifically, an embodiment of this application further provides a network-side device. As shown in FIG. 8, the network-side device 700 includes an antenna 71, a radio frequency apparatus 72, a baseband apparatus 73, a processor 74, and a memory 75. The antenna 71 is connected to the radio frequency apparatus 72. In an uplink direction, the radio frequency apparatus 72 receives information by using the antenna 71, and sends the received information to the baseband apparatus 73 for processing. In a downlink direction, the baseband apparatus 73 processes to-be-sent information, and sends the information to the radio frequency apparatus 72; and the radio frequency apparatus 72 processes the received information and then sends the information out by using the antenna 71.

The frequency band processing apparatus may be located in the baseband apparatus 73. The method performed by the network-side device in the foregoing embodiments may be implemented in the baseband apparatus 73, and the baseband apparatus 73 includes a baseband processor 74 and a memory 75.

The baseband apparatus 73 may include, for example, at least one baseband board, where a plurality of chips are disposed on the baseband board. As shown in FIG. 8, one of the chips is, for example, a baseband processor 74, and is connected to the memory 75 through the bus interface, to invoke a program in the memory 75 to perform the operations of the network device shown in the foregoing method embodiments.

The baseband apparatus 73 may further include a network interface 76, configured to exchange information with the radio frequency apparatus 72, where the interface is, for example, a common public radio interface (common public radio interface, CPRI for short).

Specifically, the network-side device 700 in this embodiment of the present invention further includes: instructions or a program stored in the memory 75 and executable on the processor 74. The processor 74 invokes the instructions or program in the memory 75 to execute the method executed by the modules shown in FIG. 5, with the same technical effects achieved. To avoid repetition, details are not repeated herein.

An embodiment of this application further provides a readable storage medium, where a program or instructions are stored in the readable storage medium. When the program or the instructions are executed by a processor, the processes of the foregoing embodiment of the interference assistance information reporting method described above can be implemented, with the same technical effects achieved. To avoid repetition, details are not described herein again.

The processor is a processor in the terminal described in the foregoing embodiments. The readable storage medium may be non-volatile or non-transitory. The readable storage medium includes a computer-readable storage medium, for example, a computer read only memory ROM, a random access memory RAM, a magnetic disk, or an optical disc.

An embodiment of this application further provides a chip, where the chip includes a processor and a communication interface. The communication interface is coupled to the processor, and the processor is configured to run a program or an instruction to implement the processes of the foregoing embodiment of the interference assistance information reporting method, with the same technical effects achieved. To avoid repetition, details are not described herein again.

It should be understood that the chip mentioned in the embodiments of this application may also be referred to as a system-level chip, a system chip, a chip system, a system-on-chip, or the like.

An embodiment of this application further provides a computer program/program product, where the computer program/program product is stored in a storage medium, and when being executed by at least one processor, the computer program/program product is configured to implement the processes of the foregoing interference assistance information reporting method embodiments, with the same technical effects achieved. To avoid repetition, details are not repeated herein.

An embodiment of this application further provides a communication system, including a terminal and a network-side device, where the terminal can be configured to execute the steps of the interference assistance information reporting method, and the network-side device can be configured to execute the steps of the interference assistance information reporting method.

It should be noted that in this specification, the term "include", "comprise", or any of their variants are intended to cover a non-exclusive inclusion, so that a process, a method, an article, or an apparatus that includes a list of elements not only includes those elements but also includes other elements that are not expressly listed, or further includes elements inherent to such process, method, article, or apparatus. In absence of more constraints, an element preceded by "includes a..." does not preclude the existence of other identical elements in the process, method, article, or apparatus that includes the element. In addition, it should be noted that the scope of the method and the apparatus in the embodiments of this application is not limited to executing the functions in an order shown or discussed, but may also include executing the functions in a substantially simultaneous manner or in a reverse order, depending on the functions involved. For example, the described methods may be performed in an order different from that described, and steps may alternatively be added, omitted, or combined. In addition, features described with reference to some examples may be combined in other examples.

According to the description of the foregoing implementations, persons skilled in the art can clearly understand that the method in the foregoing embodiments may be implemented by software in combination with a necessary general hardware platform. Certainly, the method in the foregoing embodiments may alternatively be implemented by hardware However, in many cases, the former is a preferred implementation. Based on such an understanding, the technical solutions of this application essentially or the part contributing to the prior art may be implemented in a form of a computer software product. The computer software product is stored in a storage medium (such as a ROM/RAM, a magnetic disk, or an optical disc), and includes several instructions for instructing a terminal (which may be a mobile phone, a computer, a server, an air conditioner, a network device, or the like) to perform the methods described in the embodiments of this application.

The foregoing describes the embodiments of this application with reference to the accompanying drawings. However, this application is not limited to the foregoing specific implementations. These specific implementations are merely illustrative rather than restrictive. Inspired by this application, persons of ordinary skill in the art may develop many other forms without departing from the essence of this application and the protection scope of the claims, and all such forms shall fall within the protection scope of this application.

## Claims

1. An interference assistance information reporting method, comprising:
reporting, by a terminal, interference assistance information to a network-side device in a case that an in-device coexistence IDC problem occurs, wherein the interference assistance information comprises at least one of the following: per-bandwidth part BWP interference assistance information; and per-physical resource block PRB interference assistance information.

2. The interference assistance information reporting method according to claim 1, wherein before the reporting, by a terminal, interference assistance information to a network-side device in a case that an IDC problem occurs, the method further comprises:
obtaining, by the terminal, reporting configuration information for the interference assistance information; and
the reporting, by a terminal, interference assistance information to a network-side device comprises:
reporting, by the terminal, the interference assistance information to the network-side device based on the reporting configuration information for the interference assistance information; wherein
the reporting configuration information for the interference assistance information comprises at least one of the following:
enabling control information for reporting the interference assistance information;
granularity configuration information for reporting the interference assistance information; and
target candidate resource information.

3. The interference assistance information reporting method according to claim 2, wherein the enabling control information is used to indicate at least one of the following information:
that the terminal is to enable or not enable per-BWP and/or per-PRB interference assistance information reporting; and
that the terminal is to enable or not enable per-BWP and/or per-PRB interference assistance information reporting for a target candidate resource.

4. The interference assistance information reporting method according to claim 3, wherein the enabling control information is in at least one of the following forms:
an indication field with a first length; and
a first bitmap.

5. The interference assistance information reporting method according to claim 2, wherein the granularity configuration information comprises at least one of the following indications:
a first indication field for reporting per-BWP interference assistance information; and
a second indication field for reporting per-PRB interference assistance information.

6. The interference assistance information reporting method according to claim 5, wherein the first indication field is used to indicate at least one of the following information:
that the terminal is to enable or not enable per-BWP interference assistance information reporting; and
that the terminal is to enable or not enable per-BWP interference assistance information reporting for a target candidate resource; and
the second indication field is used to indicate at least one of the following information:
that the terminal is to enable or not enable per-PRB interference assistance information reporting; and
that the terminal is to enable or not enable per-PRB interference assistance information reporting for a target candidate resource.

7. The interference assistance information reporting method according to claim 5, wherein
the first indication field is in any one of the following forms:
an indication field with a second length; and
a second bitmap; and
the second indication field is in any one of the following forms:
an indication field with a third length; and
a third bitmap.

8. The interference assistance information reporting method according to claim 2, wherein the target candidate resource information comprises at least one of the following:
candidate frequency information;
candidate BWP information; and
candidate PRB information.

9. The interference assistance information reporting method according to claim 8, wherein the candidate BWP information comprises at least one of the following:
BWP identification information; cell identification information; frequency identification information; bandwidth information; frequency domain starting position information; BWP bitmap; and frequency band identification information; and
the candidate PRB information comprises at least one of the following: PRB starting position information; PRB ending position information; PRB quantity information; bandwidth information; and PRB bitmap.

10. The interference assistance information reporting method according to claim 9, wherein the candidate PRB information further comprises at least one of the following:
frequency information, BWP information, cell information, and frequency band information.

11. The interference assistance information reporting method according to claim 1, wherein
the per-BWP interference assistance information comprises at least one of the following: BWP identification information; cell identification information; frequency identification information; bandwidth information; frequency domain starting position information; BWP bitmap; and configuration index information for candidate BWP information; and
the per-PRB interference assistance information comprises at least one of the following: PRB starting position information; PRB ending position information; PRB quantity information; bandwidth information; PRB bitmap; and configuration index information for candidate PRB information.

12. The interference assistance information reporting method according to claim 11, wherein the per-PRB interference assistance information further comprises at least one of the following: BWP identification information; cell identification information; and frequency band identification information.

13. The interference assistance information reporting method according to any one of claims 1 to 8, wherein the method further comprises: sending, by the terminal, capability information to the network-side device; wherein
the capability information comprises at least one of the following:
first capability indication information for supporting per-BWP interference assistance information reporting; and
second capability indication information for supporting per-PRB interference assistance information reporting.

14. The interference assistance information reporting method according to claim 1, wherein the method further comprises:
receiving, by the terminal, interference eliminating configuration information sent by the network-side device; and performing, by the terminal, an interference eliminating behavior based on the interference eliminating configuration information, wherein the interference eliminating configuration information comprises at least one of the following: BWP interference eliminating configuration information and PRB interference eliminating configuration information.

15. The interference assistance information reporting method according to claim 14, wherein the BWP interference eliminating configuration information is used to indicate the terminal to stop sending or receiving data on a BWP resource corresponding to the BWP interference eliminating configuration information, or the BWP interference eliminating configuration information is used to indicate the terminal to perform BWP switching; and the PRB interference eliminating configuration information is used to indicate the terminal to stop sending or receiving data on a PRB resource corresponding to the PRB interference eliminating configuration information.

16. An interference assistance information reporting method, comprising:
receiving, by a network-side device, interference assistance information reported by a terminal in a case that an IDC problem occurs, wherein the interference assistance information comprises at least one of the following: per-bandwidth part BWP interference assistance information; and per-physical resource block PRB interference assistance information.

17. The interference assistance information reporting method according to claim 16, wherein the method further comprises:
sending, by the network-side device, reporting configuration information for the interference assistance information to the terminal; wherein the reporting configuration information for the interference assistance information comprises at least one of the following:
enabling control information for reporting the interference assistance information;
granularity configuration information for reporting the interference assistance information; and
target candidate resource information.

18. The interference assistance information reporting method according to claim 17, wherein the enabling control information is used to indicate at least one of the following information:
enabling or not enabling the per-bandwidth part BWP interference assistance information reporting and/or per-physical resource block PRB interference assistance information; and
enabling or not enabling the per-bandwidth part BWP interference assistance information reporting and/or per-physical resource block PRB interference assistance information for a target candidate resource.

19. The interference assistance information reporting method according to claim 18, wherein the enabling control information is in at least one of the following forms:
an indication field with a first length; and
a first bitmap.

20. The interference assistance information reporting method according to claim 17, wherein the granularity configuration information comprises at least one of the following indications:
a first indication field for reporting per-BWP interference assistance information; and
a second indication field for reporting per-PRB interference assistance information.

21. The interference assistance information reporting method according to claim 20, wherein the first indication field is used to indicate at least one of the following information:
enabling or not enabling per-BWP interference assistance information reporting; and
enabling or not enabling per-BWP interference assistance information reporting for a target candidate resource; and
the second indication field is used to indicate at least one of the following information:
enabling or not enabling per-PRB interference assistance information reporting; and
enabling or not enabling per-PRB interference assistance information reporting for a target candidate resource.

22. The interference assistance information reporting method according to claim 20, wherein
the first indication field is in any one of the following forms:
an indication field with a second length; and
a second bitmap; and
the second indication field is in any one of the following forms:
an indication field with a third length; and
a third bitmap.

23. The interference assistance information reporting method according to claim 17, wherein the target candidate resource information comprises at least one of the following:
candidate frequency information;
candidate BWP information; and
candidate PRB information.

24. The interference assistance information reporting method according to claim 23, wherein the candidate BWP information comprises at least one of the following:
BWP identification information; cell identification information; frequency identification information; bandwidth information; frequency domain starting position information; BWP bitmap; and frequency band identification information; and
the candidate PRB information comprises at least one of the following: PRB starting position information; PRB ending position information; PRB quantity information; bandwidth information; and PRB bitmap.

25. The interference assistance information reporting method according to claim 24, wherein the candidate PRB information further comprises at least one of the following:
frequency information, BWP information, cell information, and frequency band information.

26. The interference assistance information reporting method according to claim 16, wherein
the per-BWP interference assistance information comprises at least one of the following: BWP identification information; cell identification information; frequency identification information; bandwidth information; frequency domain starting position information; BWP bitmap; and configuration index information for candidate BWP information; and
the per-PRB interference assistance information comprises at least one of the following: PRB starting position information; PRB ending position information; PRB quantity information; bandwidth information; PRB bitmap; and configuration index information for candidate PRB information.

27. The interference assistance information reporting method according to claim 26, wherein the per-PRB interference assistance information further comprises at least one of the following: BWP identification information; cell identification information; and frequency band identification information.

28. The interference assistance information reporting method according to any one of claims 16 to 23, wherein the method further comprises:
receiving, by the network-side device, capability information sent by the terminal; wherein
the capability information comprises at least one of the following:
first capability indication information for supporting per-BWP interference assistance information reporting; and
second capability indication information for supporting per-PRB interference assistance information reporting.

29. The interference assistance information reporting method according to claim 16, wherein the method further comprises:
sending, by the network-side device, interference eliminating configuration information to the terminal; wherein the interference eliminating configuration information comprises at least one of the following: BWP interference eliminating configuration information and PRB interference eliminating configuration information.

30. The interference assistance information reporting method according to claim 29, wherein the BWP interference eliminating configuration information is used to indicate the terminal to stop sending or receiving data on a BWP resource corresponding to the BWP interference eliminating configuration information, or the BWP interference eliminating configuration information is used to indicate the terminal to perform BWP switching; and the PRB interference eliminating configuration information is used to indicate the terminal to stop sending or receiving data on a PRB resource corresponding to the PRB interference eliminating configuration information.

31. An interference assistance information reporting apparatus, comprising:
a sending module, configured to report interference assistance information to a network-side device in a case that an in-device coexistence IDC problem occurs, wherein the interference assistance information comprises at least one of the following: per-bandwidth part BWP interference assistance information; and per-physical resource block PRB interference assistance information.

32. An interference assistance information reporting apparatus, comprising:
a receiving module, configured to receive interference assistance information reported by a terminal in a case that an IDC problem occurs, wherein the interference assistance information comprises at least one of the following: per-bandwidth part BWP interference assistance information; and per-physical resource block PRB interference assistance information.

33. A terminal, comprising a processor and a memory, wherein the memory stores a program or instructions executable on the processor, and when the program or the instructions are executed by the processor, the steps of the interference assistance information reporting method according to any one of claims 1 to 15 are implemented.

34. A network-side device, comprising a processor and a memory, wherein the memory stores a program or instructions executable on the processor, and when the program or the instructions are executed by the processor, the steps of the interference assistance information reporting method according to any one of claims 16 to 30 are implemented.

35. A readable storage medium, wherein the readable storage medium stores a program or instructions, and when the program or the instructions are executed by a processor, the steps of the interference assistance information reporting method according to any one of claims 1 to 15 are implemented, or the steps of the interference assistance information reporting method according to any one of claims 16 to 30 are implemented.
